(19) Europäisches Patentamt
European Patent Office
Office européen des brevets

(11) EP 4 447 143 A1

(12) EUROPEAN PATENT APPLICATION

(43) Date of publication:
**16.10.2024 Bulletin 2024/42**

(21) Application number: **24167836.6**

(22) Date of filing: **29.03.2024**

(51) International Patent Classification (IPC):
***H01M 4/131*** *(2010.01)* ***H01M 4/36*** *(2006.01)*
***H01M 4/525*** *(2010.01)* ***H01M 10/0525*** *(2010.01)*
***H01M 10/0567*** *(2010.01)*

(52) Cooperative Patent Classification (CPC):
**H01M 10/0567; H01M 4/131; H01M 4/364; H01M 4/525; H01M 10/0525;** H01M 2300/0025; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 CN 202310323533**

(71) Applicant: **Ningde Amperex Technology Ltd.**
**Ningde City, Fujian 352100 (CN)**

(72) Inventors:
- **CUI, Hui**
**Ningde City, Fujian Province, People s Republic of China, 352100 (CN)**
- **LUO, Shikang**
**Ningde City, Fujian Province, People s Republic of China, 352100 (CN)**
- **HAN, Junqiang**
**Ningde City, Fujian Province, People s Republic of China, 352100 (CN)**
- **TANG, Chao**
**Ningde City, Fujian Province, People s Republic of China, 352100 (CN)**

(74) Representative: **Icosa**
**83 avenue Denfert-Rochereau**
**75014 Paris (FR)**

# (54) ELECTROCHEMICAL DEVICE AND ELECTRONIC DEVICE

(57) An electrochemical device includes a positive electrode plate and an electrolyte. The positive electrode plate includes a positive active material layer. The positive active material layer includes a positive active material and a positive electrode additive. The positive electrode additive includes at least one of lithium titanium aluminum phosphate, lithium lanthanum titanium oxide, lithium lanthanum tantalum oxide, lithium aluminum germanium phosphate, lithium lanthanum zirconium oxide, niobium-doped lithium lanthanum zirconium oxide, or tantalum-doped lithium lanthanum zirconium oxide. The electrolyte includes a compound represented by Formula (I). Based on a mass of the positive active material layer, a mass percent of the positive electrode additive is p%, satisfying: $0.1 \leq p \leq 1.2$. Based on a mass of the electrolyte, a mass percent of the compound represented by Formula (I) is q%, satisfying: $0.1 \leq q \leq 12$.

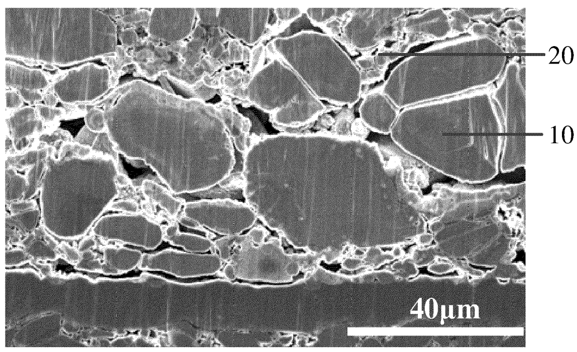

FIG. 1

EP 4 447 143 A1

## Description

### TECHNICAL FIELD

This application relates to the field of electrochemical technology, and in particular, to an electrochemical device and an electronic device.

### BACKGROUND

Electrochemical devices, such as a lithium-ion battery, are widely used in the fields such as portable electronic products, electric transportation, national defense aviation, and energy storage by virtue of a high energy density, high cycle performance, environment-friendliness, safety, and no memory effect. In the prior art, by increasing the voltage of the lithium-ion battery, more lithium ions can be extracted from a crystal structure of positive active material, thereby increasing the capacity of the positive active material, and in turn, increasing the energy density of the lithium-ion battery.

However, when the voltage of the lithium-ion battery rises to a higher level, the extraction of lithium ions from the crystal structure of the positive active material leads to a series of irreversible phase transitions, and greatly reduces the cycle performance of the positive active material. In addition, this leads to an increase in interfacial side reactions between a positive electrode plate and an electrolyte under a high voltage, more electrolyte is decomposed, and transition metal is dissolved out severely, thereby resulting in capacity fading of the positive active material, and impairing the cycle performance of the lithium-ion battery.

### SUMMARY

An objective of this application is to provide an electrochemical device and an electronic device to improve cycle performance of the electrochemical device.

Specific technical solutions are as follows:

A first aspect of this application provides an electrochemical device. The electrochemical device includes a positive electrode plate and an electrolyte. The positive electrode plate includes a positive current collector and a positive active material layer disposed on at least one surface of the positive current collector. The positive active material layer includes a positive active material and a positive electrode additive. The positive electrode additive includes at least one of lithium titanium aluminum phosphate, lithium lanthanum titanium oxide, lithium lanthanum tantalum oxide, lithium aluminum germanium phosphate, lithium lanthanum zirconium oxide, niobium-doped lithium lanthanum zirconium oxide, or tantalum-doped lithium lanthanum zirconium oxide. Based on a mass of the positive active material layer, a mass percent of the positive electrode additive is p%, satisfying: $0.1 \leq p \leq 1.2$. The electrolyte includes a compound represented by Formula (I):

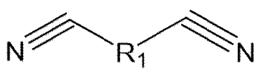

Formula (I).

In Formula (I) above, $R_1$ is selected from

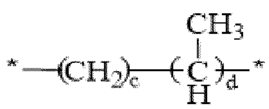

,

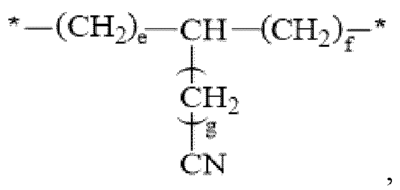
, or
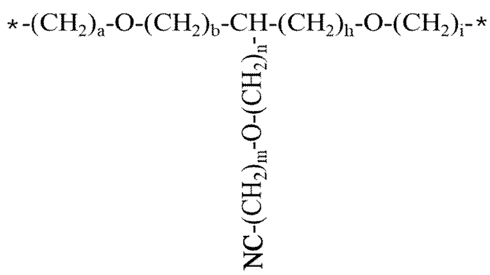
,

where a, b, c, d, e, f, g, h, i, m, and n each are independently integers from 0 to 10; c and d are not both 0; and, based on a mass of the electrolyte, a mass percent of the compound represented by Formula (I) is q%, satisfying: $0.1 \leq q \leq 12$. The positive electrode plate includes the positive electrode additive, the electrolyte includes the compound of Formula (I), and the values of p and q are controlled to fall within the ranges specified herein. Therefore, the positive electrode additive can form a physical barrier between the positive active material and the electrolyte, thereby reducing interfacial reactions between the positive active material and the electrolyte. In addition, when the positive active material is highly delithiated, the positive electrode additive can be used as a lithium source for supplementing lithium to alleviate the delithiation-induced structural phase transition of the positive active material. However, during cycling of the electrochemical device, the positive active material keeps delithiating, thereby gradually generating stress and strain. The stress and strain lead to a tendency to weaken the contact between the positive electrode additive and the positive active material. When the contact between the positive electrode additive and the positive active material becomes weak, the positive electrode additive is less capable of suppressing the interfacial reactions between the positive active material and the electrolyte. In this case, the compound of Formula (I) can reduce the interfacial reactions, stabilize the positive active material and the positive electrode additive, and maintain the physical barrier and lithium supplement provided by the positive electrode additive, thereby improving the cycle performance, high-temperature intermittent cycle performance, and expansion resistance of the electrochemical device under a high voltage.

In some embodiments of this application, the compound represented by Formula (I) includes the following compounds:

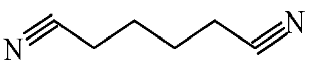
Formula (I-1),
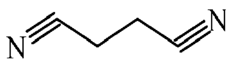
Formula (I-2),
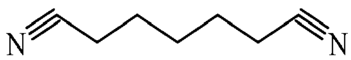
Formula (I-3)

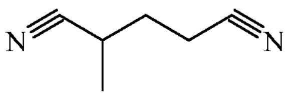
Formula (I-4),
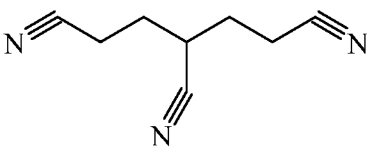
Formula (I-5),
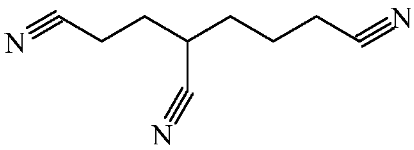
Formula (I-6)

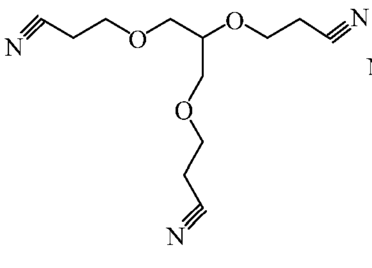
Formula (I-7),
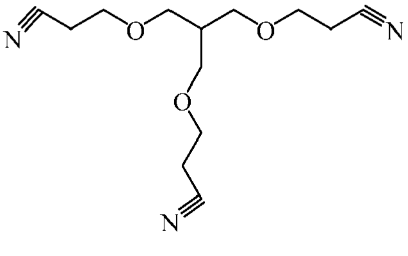
Formula (I-8),
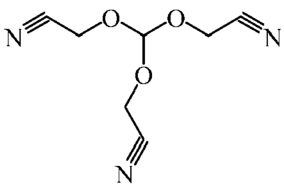
Formula (I-9)

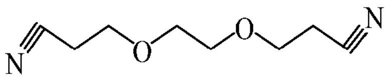
Formula (I-10),
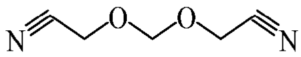
Formula (I-11),
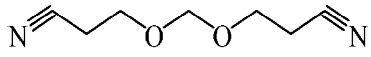
Formula (I-12).

By applying the electrolyte containing the compounds of Formula (I) falling within the above ranges to the electrochemical device, this application can reduce dissolution of transition metals (such as cobalt) and the possibility of depositing the transition metals on the surface of a negative electrode plate, thereby improving the cycle performance and high-temperature intermittent cycle performance of the electrochemical device.

In some embodiments of this application, the value of q satisfies: $0.5 \leq q \leq 12$. By controlling the mass percent of the compound of Formula (I) to fall within the above range, this application reduces the dissolution of transition metals and the possibility of depositing the transition metals on the surface of the negative electrode plate, thereby improving the cycle performance, high-temperature intermittent cycle performance, and expansion resistance of the electrochemical device.

In some embodiments of this application, p and q satisfy: $0.025 \leq p/q \leq 1$. By controlling the value of the p/q ratio to fall within the above range, this application can further reduce the interfacial reactions between the positive active material and the electrolyte, and reduce the dissolution of transition metals and the possibility of depositing the transition metals on the surface of the negative electrode plate, thereby improving the cycle performance and high-temperature intermittent cycle performance of the electrochemical device.

In some embodiments of this application, a particle diameter of the positive electrode additive is D nm, and D satisfies: $300 \leq D \leq 500$. By controlling the value of D to fall within the above range, this application further reduces the interfacial reactions between the positive active material and the electrolyte, and further alleviate the delithiation-induced structural phase transition of the positive active material, thereby improving the cycle performance and high-temperature intermittent cycle performance of the electrochemical device.

In some embodiments of this application, molar ratios between elements at a position between particles of the positive active material in a cross-section of the positive electrode plate satisfy at least one of the following characteristics: (a) $0.5 \leq Ti/Al \leq 5$; (b) $1 \leq Ti/La \leq 7$; (c) $1 \leq La/Zr \leq 3$; (d) $1 \leq La/Ta \leq 12$; or (e) $0.5 \leq Ge/Al \leq 3$. By applying the positive electrode plate of the above characteristics to the electrochemical device, this application can endow the electrochemical device with good cycle performance, high-temperature intermittent cycle performance, and expansion resistance.

In some embodiments of this application, the electrolyte further includes a compound represented by Formula (II). The compound represented by Formula (II) includes the following compounds:

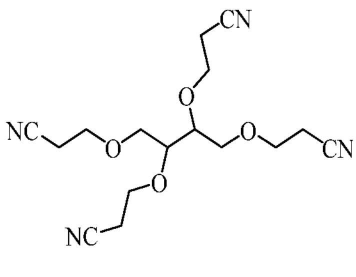
Formula (II-1),
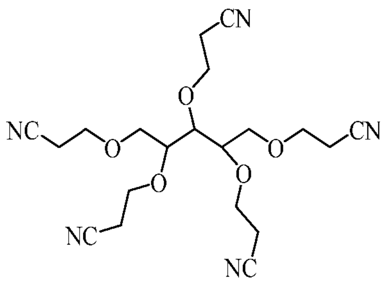
Formula (II-2),
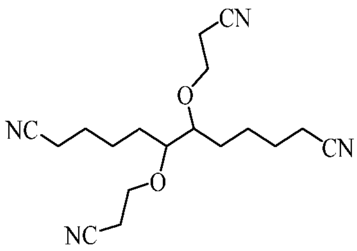
Formula (II-3)

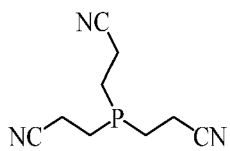
Formula (II-4),
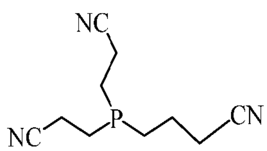
Formula (II-5),
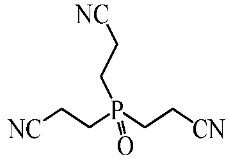
Formula (II-6),
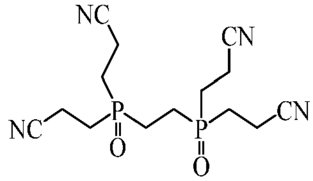
Formula (II-7)

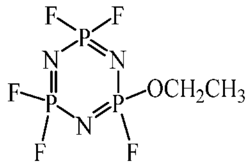 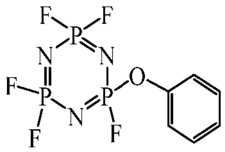 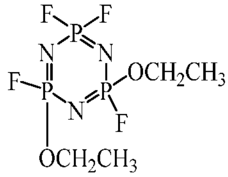 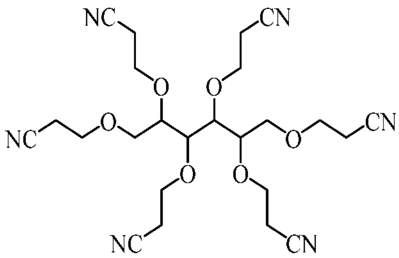

Formula (II-8), Formula (II-9), Formula (II-10), Formula (II-11).

Based on the mass of the electrolyte, a mass percent of the compound represented by Formula (II) is x%, satisfying: $0.1 \leq x \leq 5$. With the electrolyte containing the compound of Formula (II) falling within the above range, by controlling the content of the compound to fall within the above range, this application makes the cathode electrolyte interphase film more stable, and further reduces the dissolution of transition metals and the possibility of depositing the transition metals on the surface of the negative electrode plate, thereby improving the cycle performance, high-temperature intermittent cycle performance, and expansion resistance of the electrochemical device.

In some embodiments of this application, the electrolyte further includes an electrolyte additive. The electrolyte additive includes at least one of 1,3-propane sultone, vinylene carbonate, 1,3,2-dioxazolethiophene-2,2-dioxide, or lithium bis(oxalato)borate. Based on the mass of the electrolyte, a mass percent of the electrolyte additive is 0.01% to 7%. With the electrolyte containing the electrolyte additive falling within the above range, by controlling the content of the additive to fall within the above range, this application makes the cathode electrolyte interphase film more stable, and further reduces the dissolution of transition metals and the possibility of depositing the transition metals on the surface of the negative electrode plate, thereby improving the cycle performance, high-temperature intermittent cycle performance, and expansion resistance of the electrochemical device.

In some embodiments of this application, the electrolyte additive includes 1,3-propane sultone and vinylene carbonate. Based on the total mass of the electrolyte, an aggregate mass percent of the 1,3-propane sultone and the vinylene carbonate is y%, satisfying: $0.5 \leq q/y \leq 1.6$. With the electrolyte containing the electrolyte additive falling within the above range, by controlling the value of the q/y ratio to fall within the above range, this application makes the cathode electrolyte interphase film more stable, makes the transition metals more stable on the surface of the positive active material layer, and reduces the dissolution of the transition metals and the possibility of depositing the transition metals on the surface of the negative electrode plate, thereby further improving the cycle performance, high-temperature intermittent cycle performance, and expansion resistance of the electrochemical device.

A second aspect of this application provides an electronic device. The electronic device includes the electrochemical device according to the first aspect of this application. The electrochemical device according to this application exhibits good cycle performance, high-temperature intermittent cycle performance, and expansion resistance. Therefore, the electronic device of this application exhibits a relatively long lifespan.

Beneficial effects of this application are as follows:

This application provides an electrochemical device and an electronic device. The electrochemical device includes a positive electrode plate, a negative electrode plate, and an electrolyte. The positive electrode plate includes a positive current collector and a positive active material layer disposed on at least one surface of the positive current collector. The positive active material layer includes a positive active material and a positive electrode additive. The positive electrode additive includes at least one of lithium titanium aluminum phosphate, lithium lanthanum titanium oxide, lithium lanthanum tantalum oxide, lithium aluminum germanium phosphate, lithium lanthanum zirconium oxide, niobium-doped lithium lanthanum zirconium oxide, or tantalum-doped lithium lanthanum zirconium oxide. Based on a mass of the positive active material layer, a mass percent of the positive electrode additive is p%, satisfying: $0.1 \leq p \leq 1.2$. The electrolyte includes a compound represented by Formula (I). Based on a mass of the electrolyte, a mass percent of the compound represented by Formula (I) is q%, satisfying: $0.1 \leq q \leq 12$. The positive electrode plate includes the positive electrode additive, the electrolyte includes the compound of Formula (I), and the values of p and q are controlled to fall within the ranges specified herein. Therefore, the positive electrode additive can form a physical barrier between the positive active material and the electrolyte, thereby reducing interfacial reactions between the positive active material and the electrolyte. In addition, when the positive active material is highly delithiated, the positive electrode additive can be used as a lithium source for supplementing lithium to alleviate the delithiation-induced structural phase transition of the positive active material. However, during cycling of the electrochemical device, the positive active material keeps delithiating, thereby gradually generating stress and strain. The stress and strain lead to a tendency to weaken the

contact between the positive electrode additive and the positive active material. When the contact between the positive electrode additive and the positive active material becomes weak, the positive electrode additive is less capable of suppressing the interfacial reactions between the positive active material and the electrolyte. In this case, the compound of Formula (I) can reduce the interfacial reactions, stabilize the positive active material and the positive electrode additive, and maintain the physical barrier and lithium supplement provided by the positive electrode additive, thereby improving the cycle performance, high-temperature intermittent cycle performance, and expansion resistance of the electrochemical device under a high voltage.

Definitely, a single product or method implemented according to this application does not necessarily achieve all of the above advantages concurrently.

## BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.

FIG. 1 is a scanning electron microscope image of a positive active material layer according to Embodiment 1-3 of this application; and

FIG. 2 is a distribution diagram of Ti element at a position between particles of a positive active material in a cross-section of a positive electrode plate according to Embodiment 1-3 of this application.

## DETAILED DESCRIPTION OF EMBODIMENTS

The following describes the technical solutions in some embodiments of this application clearly in detail with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in specific embodiments of this application, this application is construed by using a lithium-ion battery as an example of the electrochemical device, but the electrochemical device according to this application is not limited to the lithium-ion battery.

A first aspect of this application provides an electrochemical device. The electrochemical device includes a positive electrode plate and an electrolyte. The positive electrode plate includes a positive current collector and a positive active material layer disposed on at least one surface of the positive current collector. The positive active material layer includes a positive active material and a positive electrode additive. The positive electrode additive includes at least one of lithium titanium aluminum phosphate, lithium lanthanum titanium oxide, lithium lanthanum tantalum oxide, lithium aluminum germanium phosphate, lithium lanthanum zirconium oxide, niobium-doped lithium lanthanum zirconium oxide, or tantalum-doped lithium lanthanum zirconium oxide. Based on a mass of the positive active material layer, a mass percent of the positive electrode additive is p%, satisfying: $0.1 \leq p \leq 1.2$. For example, p may be 0.1, 0.3, 0.4, 0.6, 0.7, 0.9, 1.1, 1.2, or a value falling within a range formed by any two thereof. The electrolyte includes a compound represented by Formula (I):

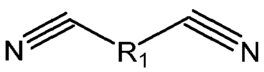

Formula (I),

In Formula (I) above, $R_1$ is selected from

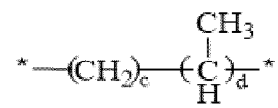
,

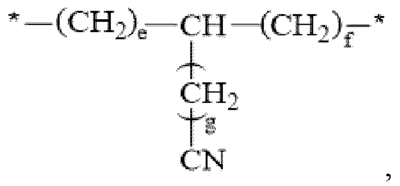
, or
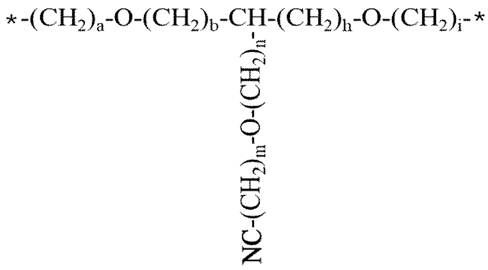
,

where a, b, c, d, e, f, g, h, i, m, and n each are independently integers from 0 to 10, for example, a, b, c, d, e, f, g, h, i, m, and n each may independently be 0, 1, 2, 3, 4, 5, 6, 7, 8, 9, or 10; and c and d are not both 0. Based on a mass of the electrolyte, a mass percent of the compound represented by Formula (I) is q%, satisfying: $0.1 \leq q \leq 12$, and optionally $0.5 \leq q \leq 12$. For example, the value of q may be 0.1, 0.4, 0.9, 1.5, 2.5, 3.5, 4.5, 6.5, 8.5, 10, 12, or a value falling within a range formed by any two thereof.

The positive electrode plate includes the positive electrode additive, the electrolyte includes the compound of Formula (I), and the values of p and q are controlled to fall within the ranges specified herein. Therefore, the positive electrode additive can form a physical barrier between the positive active material and the electrolyte, thereby reducing interfacial reactions between the positive active material and the electrolyte. In addition, when the positive active material is highly delithiated, the positive electrode additive can be used as a lithium source for supplementing lithium to alleviate the delithiation-induced structural phase transition of the positive active material. However, during cycling of the electrochemical device, the positive active material keeps delithiating, thereby gradually generating stress and strain. The stress and strain lead to a tendency to weaken the contact between the positive electrode additive and the positive active material. When the contact between the positive electrode additive and the positive active material becomes weak, the positive electrode additive is less capable of suppressing the interfacial reactions between the positive active material and the electrolyte. In this case, the compound of Formula (I) can reduce the interfacial reactions, stabilize the positive active material and the positive electrode additive, and maintain the physical barrier and lithium supplement provided by the positive electrode additive, thereby improving the cycle performance, high-temperature intermittent cycle performance, and expansion resistance of the electrochemical device under a high voltage. When the value of p is unduly small, the positive electrode additive is insignificant in playing an improvement role, unable to provide a physical barrier between the positive active material layer and the electrolyte, insignificant in reducing the side reactions between the positive active material and the electrolyte and alleviating the delithiation-induced structural phase transition of the positive active material, and unfavorable to improving the cycle performance and high-temperature intermittent cycle performance of the electrochemical device. When the value of p is unduly large, the content of the positive electrode additive is unduly high, thereby being unfavorable to the transport of lithium ions in the positive active material layer and unfavorable to improving the cycle performance of the electrochemical device. When the value of q is unduly small, the compound of Formula (I) is insignificant in playing an improvement role, and unable to play a role in reducing the interfacial reactions between the positive active material and the electrolyte, or a role in stabilizing the positive active material layer and the positive electrode additive, or a role in maintaining the physical barrier and lithium supplement provided by the positive electrode additive, thereby being unfavorable to improving the cycle performance, high-temperature intermittent cycle performance, and expansion resistance of the electrochemical device. When the value of q is unduly large, the content of the compound of Formula (I) is unduly high, the steric hindrance of transport of lithium ions in the electrolyte will be unduly high, and the interfacial resistance between the positive active material and the electrolyte will be unduly high, thereby being unfavorable to the transport of lithium ions and unfavorable to improving the cycle performance of the electrochemical device. Therefore, by applying the positive electrode additive and the compound of Formula (I) specified herein to the lithium-ion battery and controlling the values of p and q to fall within the ranges specified herein, this application can improve the cycle performance, high-temperature intermittent cycle performance, and expansion resistance of the electrochemical device. In this application, "high temperature" means a temperature higher than or equal to 45 °C.

In some embodiments of this application, the compound represented by Formula (I) includes the following compounds:

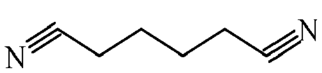
Formula (I-1),
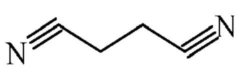
Formula (I-2),
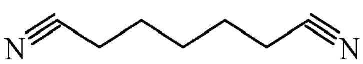
Formula (I-3)

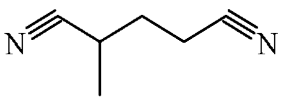

Formula (I-4),

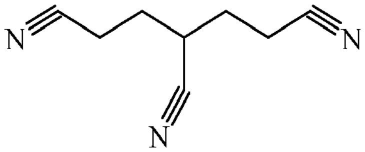

Formula (I-5),

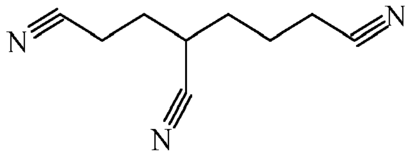

Formula (I-6)

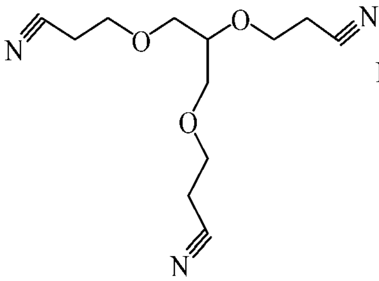

Formula (I-7),

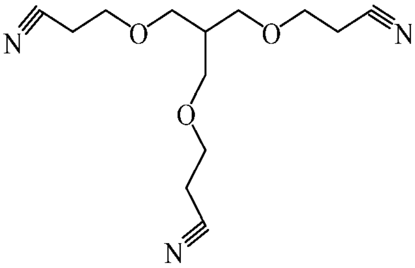

Formula (I-8),

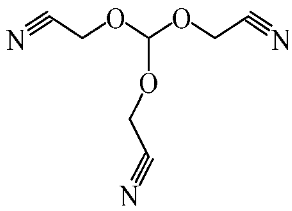

Formula (I-9)

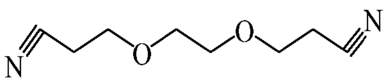

Formula (I-10),

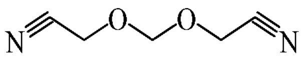

Formula (I-11),

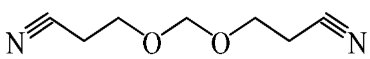

Formula (I-12).

When the electrolyte containing the compound of Formula (I) falling within the above range to the electrochemical device, the transition metals on the surface of the positive active material layer are further complexed with by using the cyano group in the compound of Formula (I), thereby making the transition metals more stable on the surface of the positive active material layer, reducing the dissolution of the transition metals and the possibility of depositing the transition metals on the surface of the negative electrode plate, reducing the interfacial reactions between the positive active material and the electrolyte, stabilizing the positive active material layer and the positive electrode additive, maintaining the physical barrier and lithium supplement provided by the positive electrode additive, and in turn, improving the cycle performance, high-temperature intermittent cycle performance, and expansion resistance of the electrochemical device.

In some embodiments of this application, p and q satisfy: $0.025 \leq p/q \leq 1$. For example, the p/q ratio may be 0.025, 0.03, 0.05, 0.1, 0.3, 0.4, 0.5, 0.75, 0.9, 1, or a value falling within a range formed by any two thereof. By controlling the value of the p/q ratio to fall within the above range, this application can well exert the synergistic effect between the positive electrode additive and the compound of Formula (I), further reduce the interfacial reactions between the positive active material and the electrolyte, alleviate the delithiation-induced structural phase transition of the positive active material, and reduce the dissolution of transition metals and the possibility of depositing the transition metals on the surface of the negative electrode plate, thereby further improving the cycle performance, high-temperature intermittent cycle performance, and expansion resistance of the electrochemical device.

In some embodiments of this application, a particle diameter of the positive electrode additive is D nm, and D satisfies: $300 \leq D \leq 500$. For example, D may be 300, 340, 380, 400, 420, 460, 500, or a value falling within a range formed by any two thereof. By controlling the value of D to fall within the above range, this application further reduces the interfacial reactions between the positive active material and the electrolyte, and further alleviate the delithiation-induced structural phase transition of the positive active material, thereby improving the cycle performance and high-temperature intermittent cycle performance of the electrochemical device. In this application, the particle diameter D of the positive electrode additive is an average particle diameter of the positive electrode additive.

In some embodiments of this application, molar ratios between elements at a position between particles of the positive active material in a cross-section of the positive electrode plate satisfy at least one of the following characteristics: (a) $0.5 \leq Ti/Al \leq 5$; (b) $1 \leq Ti/La \leq 7$; (c) $1 \leq La/Zr \leq 3$; (d) $1 \leq La/Ta \leq 12$; or (e) $0.5 \leq Ge/Al \leq 3$. For example, the molar ratio between Ti and Al, denoted as Ti/Al molar ratio, may be 0.5, 1, 2, 3, 4, 5, or a value falling within a range formed by any two thereof; the Ti/La molar ratio may be 1, 2, 3, 3.5, 4, 5, 6, 7, or a value falling within a range formed by any two thereof; the La/Zr molar ratio may be 1, 1.2, 1.5, 1.8, 2.2, 2.5, 2.8, 3, or a value falling within a range formed by any two thereof; the La/Ta molar ratio may be 1, 1.5, 3.5, 4.5, 6.5, 8.5, 10, 12, or a value falling within a range formed by

any two thereof; and the Ge/Al molar ratio may be 0.5, 0.8, 1.2, 1.5, 1.8, 2.2, 2.6, 3, or a value falling within a range formed by any two thereof. By applying the positive electrode plate of the above characteristics to the electrochemical device, this application can reduce the interfacial reactions between the positive active material and the electrolyte, further alleviate the delithiation-induced structural phase transition of the positive active material, and reduce the dissolution of transition metals and the possibility of depositing the transition metals on the surface of the negative electrode plate, thereby further improving the cycle performance, high-temperature intermittent cycle performance, and expansion resistance of the electrochemical device.

In this application, the cross-section of the positive electrode plate is formed by sectioning the positive active material layer in a direction perpendicular to the thickness direction of the positive electrode plate. The sectioning depth and sectioning method are not particularly limited herein, as long as the cutting surface is flat and even and the scanning electron microscopy image enables visibility of the particle interface of the positive active material and the positive electrode additive at the position between particles of the positive active material. For example, the sectioning method may include, but is not limited to, cutting by means of ion beam cross-section polishing. The process parameters of the ion beam cross-section polishing are not particularly limited herein, as long as the objectives of this application can be achieved.

In this application, the general formula of the lithium aluminum titanium phosphate (LATP) is $Li_{1+u}Al_uTi_{2-u}(PO_4)_3$, $0 < u \leq 0.5$, for example, $Li_{1.3}Al_{0.3}Ti_{1.7}(PO_4)_3$, $Li_{1.5}Al_{0.5}Ti_{1.5}(PO_4)_3$. The general formula of the lithium lanthanum titanium oxide (LLTO) is $Li_{3v}La_{2/3-v}TiO_3$, $0 < v \leq 0.2$, for example, $Li_{0.5}La_{0.5}TiO_3$, $Li_{0.33}La_{0.56}TiO_3$, $Li_{0.35}La_{0.55}TiO_3$. The chemical formula of lithium lanthanum tantalum oxide is $Li_{0.33}La_{0.56}Ta_{0.8}O_3$. The general formula of the lithium aluminum germanium phosphate is $Li_{1+w}Al_wGe_{2-w}(PO_4)_3$, $0 < w \leq 0.5$, for example, $Li_{1.5}Al_{0.5}Ge_{1.5}(PO_4)_3$. The chemical formula of the lithium lanthanum zirconium oxide (LLZO) is $Li_7La_3Zr_2O_{12}$. The chemical formula of the niobium-doped lithium lanthanum zirconium oxide is $Li_{7-z}La_3Zr_{2-z}Nb_zO_{12}$, $0 < z \leq 0.25$, for example, $Li_{6.75}La_3Zr_{1.75}Nb_{0.25}O_{12}$, or $Li_{6.8}La_3Zr_{1.8}Nb_{0.2}O_{12}$. The general formula of the tantalum-doped lithium lanthanum zirconium oxide is $Li_{7-r}La_3Zr_{2-r}Ta_rO_{12}$, $0 \leq r \leq 0.5$, for example, $Li_{6.5}La_3Zr_{1.5}Ta_{0.5}O_{12}$, or $Li_{6.75}La_3Zr_{1.75}Ta_{0.25}O_{12}$.

Generally, the particle diameter of the positive electrode additive can be changed by selecting positive electrode additives of different particle diameters. The Ti/Al molar ratio at the position between particles of the positive active material in the cross-section of the positive electrode plate can be caused to satisfy $0.5 \leq Ti/Al \leq 5$ by adjusting the mass percent of one of two types of lithium aluminum titanium phosphates containing Ti and Al at different mass ratios. The positive electrode additive includes constituents $Li_{1.3}Al_{0.3}Ti_{1.7}(PO_4)_3$ and $Li_{1.5}Al_{0.5}Ti_{1.5}(PO_4)_3$, and the Ti/Al molar ratio can be regulated by adjusting the mass ratio between the two constituents, and specifically, by adjusting the mass percent of one of the constituents. For example, the Ti/Al molar ratio is increased by increasing the mass percent of $Li_{1.3}Al_{0.3}Ti_{1.7}(PO_4)_3$, and the Ti/Al mass ratio is decreased by decreasing the mass percent of $Li_{1.3}Al_{0.3}Ti_{1.7}(PO_4)_3$. Other constituents such as lithium lanthanum titanium oxide and lithium aluminum germanium phosphate may be added, and the Ti/Al molar ratio at the position between particles of the positive active material in the cross-section of the positive electrode plate can be caused to satisfy $0.5 \leq Ti/Al \leq 5$ by adjusting the mass ratio between lithium aluminum titanium phosphate and such constituents. When the positive electrode additive includes lithium lanthanum titanium oxide (LLTO), the Ti/La molar ratio at the position between particles of the positive active material in the cross-section of the positive electrode plate can be caused to satisfy $0.5 \leq Ti/La \leq 2$ by adjusting the mass percent of one of two types of lithium lanthanum titanium oxides containing Ti and La at different mass ratios. For example, the positive electrode additive includes constituents $Li_{0.5}La_{0.5}TiO_3$ and $Li_{0.33}La_{0.56}TiO_3$. The Ti/La molar ratio is increased by increasing the mass percent of $Li_{0.5}La_{0.5}TiO_3$, and the Ti/La molar ratio is decreased by decreasing the mass percent of $Li_{0.5}La_{0.5}TiO_3$. Other constituents such as lithium aluminum titanium phosphate, lithium lanthanum titanium oxide, lithium lanthanum tantalum oxide, lithium lanthanum zirconium oxide, niobium-doped lithium lanthanum zirconium oxide, or tantalum-doped lithium lanthanum zirconium oxide may be added. The Ti/Al molar ratio at the position between particles of the positive active material in the cross-section of the positive electrode plate can be caused to satisfy $0.5 \leq Ti/Al \leq 5$ by adjusting the mass ratio between lithium lanthanum titanium oxide and such constituents. Similarly, the La/Zr molar ratio, the La/Ta molar ratio, and the Ge/Al molar ratio may be regulated with reference to the above method, the details of which are omitted here.

In some embodiments of this application, the electrolyte further includes a compound represented by Formula (II). The compound represented by Formula (II) includes the following compounds:

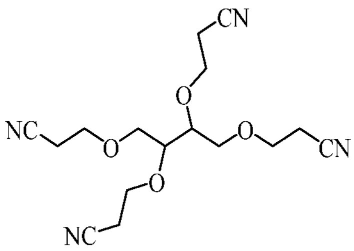 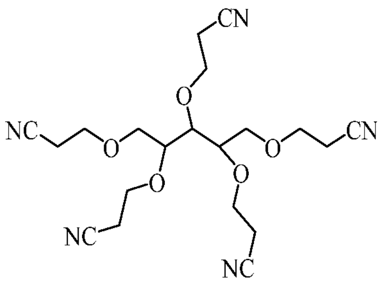 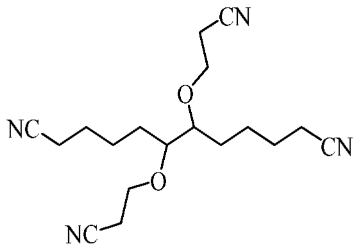

Formula (II-1), Formula (II-2), Formula (II-3)

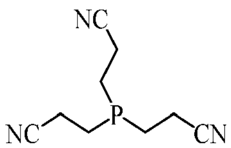 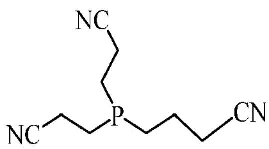 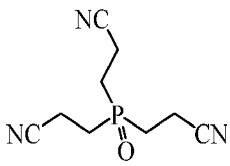 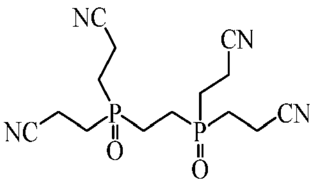

Formula (II-4), Formula (II-5), Formula (II-6), Formula (II-7)

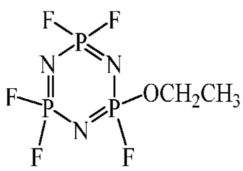 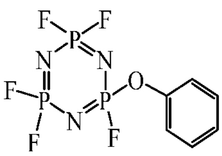 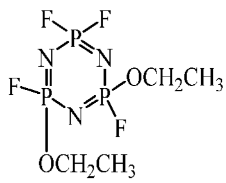 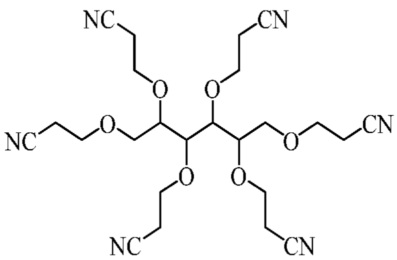

Formula (II-8), Formula (II-9), Formula (II-10), Formula (II-11).

Based on the mass of the electrolyte, a mass percent of the compound represented by Formula (II) is x%, satisfying: $0.1 \leq x \leq 5$. For example, the value of x may be 0.1, 0.5, 0.9, 1.5, 2, 2.6, 3, 3.5, 4, 4.5, 5, or a value falling within a range formed by any two thereof. With the electrolyte containing the compound of Formula (II) falling within the above range, by controlling the content of the compound to fall within the above range, this application makes the cathode electrolyte interphase film more stable, makes the transition metals more stable on the surface of the positive active material layer, and reduces the dissolution of the transition metals and the possibility of depositing the transition metals on the surface of the negative electrode plate, thereby further improving the cycle performance, high-temperature intermittent cycle performance, and expansion resistance of the electrochemical device.

In some embodiments of this application, the electrolyte further includes an electrolyte additive. The electrolyte additive includes at least one of 1,3-propane sultone (PS), vinylene carbonate (VC), 1,3,2-dioxazolethiophene-2,2-dioxide (DTD), or lithium bis(oxalato)borate (LiBOB). Based on the mass of the electrolyte, a mass percent of the electrolyte additive is 0.01% to 7%. For example, the mass percent of the electrolyte additive may be 0.01%, 0.05%, 0.1%, 0.5%, 0.9%, 1.5%, 2.5%, 3.5%, 4.5%, 5.5%, 6.5%, 7%, or a value falling within a range formed by any two thereof. With the electrolyte containing the electrolyte additive falling within the above range, by controlling the content of the additive to fall within the above range, this application makes the cathode electrolyte interphase film more stable, makes the transition metals more stable on the surface of the positive active material layer, and reduces the dissolution of the transition metals and the possibility of depositing the transition metals on the surface of the negative electrode plate, thereby further improving the cycle performance, high-temperature intermittent cycle performance, and expansion resistance of the electrochemical device.

In some embodiments of this application, the electrolyte additive includes 1,3-propane sultone and vinylene carbonate. Based on the total mass of the electrolyte, an aggregate mass percent of the 1,3-propane sultone and the vinylene carbonate is y%, satisfying: $0.5 \leq q/y \leq 1.6$. For example, the q/y ratio may be 0.5, 0.75, 0.9, 1, 1.2, 1.3, 1.4, 1.5, 1.6, or a value falling within a range formed by any two thereof. With the electrolyte containing the electrolyte additive

falling within the above range, by controlling the value of the q/y ratio to fall within the above range, this application makes the cathode electrolyte interphase film more stable, makes the transition metals more stable on the surface of the positive active material layer, and reduces the dissolution of the transition metals and the possibility of depositing the transition metals on the surface of the negative electrode plate, thereby further improving the cycle performance, high-temperature intermittent cycle performance, and expansion resistance of the electrochemical device.

In this application, the electrolyte further includes a lithium salt and a nonaqueous solvent. The lithium salt may include at least one of $LiPF_6$, $LiBF_4$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalato)borate (LiBOB), or lithium difluoroborate. The mass percent of the lithium salt in the electrolyte is not particularly limited herein, as long as the objectives of this application can be achieved. For example, based on the mass of the electrolyte, the mass percent of the lithium salt is 8% to 15%. For example, the mass percent of the lithium salt is 8%, 9%, 10%, 11%, 13%, 15%, or a value falling within a range formed by any two thereof. The nonaqueous solvent is not particularly limited in this application, as long as the objectives of this application can be achieved. For example, the nonaqueous solvent may include, but is not limited to, at least one of a carbonate compound, a carboxylate compound, an ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. Based on the mass of the electrolyte, the mass percent of the nonaqueous solvent may be 65% to 90%, for example, may be 65%, 70%, 75%, 80%, 86%, 88%, 90%, or a value falling within a range formed by any two thereof.

The positive current collector is not particularly limited in this application, as long as the objectives of this application can be achieved. For example, the positive current collector may include aluminum foil, aluminum alloy foil, or the like. The positive active material layer in this application includes a positive active material. The type of the positive active material is not particularly limited in this application, as long as the objectives of this application can be achieved. For example, the positive active material may include at least one of lithium nickel cobalt manganese oxide (NCM811, NCM622, NCM523, NCM111), lithium nickel cobalt aluminum oxide, lithium iron phosphate, a lithium-rich manganese-based material, lithium cobalt oxide ($LiCoO_2$), lithium manganese oxide, lithium manganese iron phosphate, lithium titanium oxide, or the like. In this application, the positive active material may further include a non-metallic element. For example, the non-metallic elements include at least one of fluorine, phosphorus, boron, chlorine, silicon, or sulfur. Such elements can further improve the stability of the positive active material. In this application, the thicknesses of the positive current collector and the positive active material layer are not particularly limited, as long as the objectives of this application can be achieved. For example, the thickness of the positive current collector is 5 μm to 20 μm, and preferably 6 μm to 18 μm. The thickness of the positive active material layer on a single side is 30 μm to 120 μm. In this application, the positive active material layer may be disposed on one surface of the positive current collector in a thickness direction or on both surfaces of the positive current collector in the thickness direction. It is hereby noted that the "surface" here may be the entire region of the positive current collector, or a partial region of the positive current collector, without being particularly limited in this application, as long as the objectives of the application can be achieved. The positive active material layer in this application may include a conductive agent and a binder.

The electrochemical device in this application further includes a negative electrode plate. The negative electrode plate is not particularly limited herein, as long as the objectives of this application can be achieved. For example, the negative electrode plate includes a negative current collector and a negative active material layer disposed on at least one surface of the negative current collector. The negative current collector is not particularly limited in this application, as long as the objectives of this application can be achieved. For example, the negative current collector may include copper foil, copper alloy foil, nickel foil, titanium foil, foamed nickel, foamed copper, or the like. The negative active material layer in this application includes a negative active material. The type of the negative active material is not particularly limited in this application, as long as the objectives of this application can be achieved. For example, the negative active material may include at least one of natural graphite, artificial graphite, mesocarbon microbead (MCMB),

hard carbon, soft carbon, silicon, a silicon-carbon composite, $SiO_k$ ($0 < k \leq 2$), metallic lithium, or the like. The thicknesses of the negative current collector and the negative active material layer are not particularly limited herein, as long as the objectives of this application can be achieved. For example, the thickness of the negative current collector is 4 μm to 12 μm, and the thickness of the negative active material layer on a single side is 30 μm to 130 μm. In this application, the negative active material layer may be disposed on one surface of the negative current collector in the thickness direction or on both surfaces of the negative current collector in the thickness direction. It is hereby noted that the "surface" here may be the entire region of the negative current collector, or a partial region of the negative current collector, without being particularly limited in this application, as long as the objectives of the application can be achieved. The negative active material layer in this application may include a conductive agent and a binder.

The conductive agent and binder are not particularly limited as long as the objectives of this application can be achieved. For example, the conductive agent may include at least one of conductive carbon black (Super P), carbon nanotubes (CNTs), carbon nanofibers, flake graphite, carbon dots, graphene, or the like. The binder may include at least one of polypropylene alcohol, sodium polyacrylate, potassium polyacrylate, lithium polyacrylate, polyimide, polyamide imide, styrene butadiene rubber (SBR), polyvinyl alcohol (PVA), polyvinylidene difluoride (PVDF), polytetrafluoroethylene (PTFE), polyvinyl butyral (PVB), water-based acrylic resin, carboxymethyl cellulose (CMC), sodium carboxymethyl cellulose (CMC-Na), or the like.

The electrochemical device in this application further includes a separator. The separator is disposed between the positive electrode plate and the negative electrode plate, and is configured to separate the positive electrode plate from the negative electrode plate, prevent an internal short circuit of the secondary battery, and allow electrolyte ions to pass freely without affecting the electrochemical charging and discharging processes. The separator is not particularly limited herein, as long as the objectives of this application can be achieved. For example, the separator may include a substrate layer and a surface treatment layer. The substrate layer may be a non-woven fabric, film or composite film, which, in each case, is porous. The material of the substrate layer may include at least one of polyethylene, polypropylene, polyethylene terephthalate, polyimide, or the like. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound. For example, the inorganic compound layer includes inorganic particles and a binder. The inorganic particles are not particularly limited, and may be at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may be at least one selected from, for example, polyvinylidene difluoride, poly(vinylidene difluoride-co-hexafluoropropylene), polytetrafluoroethylene, polyhexafluoropropylene, polyamide, polyacrylonitrile, polyacrylate, polyacrylic acid, sodium polyacrylate, potassium polyacrylate, lithium polyacrylate, polyvinylpyrrolidone, polyvinyl ether, polymethylmethacrylate, or the like. The polymer layer includes a polymer. The material of the polymer includes at least one of polyamide, polyacrylonitrile, an acrylate polymer, polyacrylic acid, sodium polyacrylate, potassium polyacrylate, lithium polyacrylate, polyvinylpyrrolidone, polyvinyl ether, polyvinylidene fluoride, poly(vinylidene fluoride-co-hexafluoropropylene), or the like. The thickness of the separator is not particularly limited in this application, as long as the objectives of this application can be achieved. For example, the thickness of the separator may be 5 μm to 500 μm.

The electrochemical device in this application is not particularly limited, and may be any device in which an electrochemical reaction occurs. In an embodiment of this application, the electrochemical device may be, but is not limited to, a lithium-ion secondary battery (lithium-ion battery), a lithium metal secondary battery, a lithium polymer secondary battery, a lithium-ion polymer secondary battery, or the like.

The process of preparing the electrochemical device is well known to a person skilled in the art, and is not particularly limited in this application. For example, the preparation process may include, but without being limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte into the package, and sealing the package to obtain an electrochemical device; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte into the package, and sealing the package to obtain an electrochemical device. In addition, an overcurrent prevention element, a guide plate, and the like may be placed into the package as required, so as to prevent the rise of internal pressure, overcharge, and overdischarge of the electrochemical device. The packaging bag is not particularly limited in this application, and may be selected by a person skilled in the art as actually required, as long as the objectives of this application can be achieved. For example, the packaging bag may be an aluminum laminated film.

A second aspect of this application provides an electronic device. The electronic device includes the electrochemical device according to the first aspect of this application. The electrochemical device provided in this application exhibits good cycle performance and high-temperature intermittent cycle performance. Therefore, the electronic device of this application exhibits a relatively long lifespan.

The electronic device according to this application is not particularly limited, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

## Embodiments

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test methods and test devices

### Testing the cycle performance

Taking the lithium-ion batteries (with a capacity of 2000 mAh) prepared in the embodiments and comparative embodiments, charging the battery at a 45 °C ambient temperature and at a constant current of 1 C until the voltage reaches 4.45 V, and then charging the battery at a constant voltage of 4.45 V until the current reaches 0.05 C, recording a charge capacity at this time as a first-cycle charge capacity of the lithium-ion battery; leaving the battery to stand for 5 minutes, and then discharging the battery at a constant current of 0.5 C until the voltage reaches 3.0 V, and leaving the battery to stand for 5 minutes, thereby completing one charge-discharge cycle. Recording the discharge capacity at this time as a first-cycle discharge capacity of the lithium-ion battery, that is, an initial capacity of the lithium-ion battery. Performing the charge-discharge test on the lithium-ion battery for 500 cycles according to the method described above, and recording the $500^{th}$-cycle discharge capacity. $500^{th}$-cycle capacity retention rate of the battery cycled at 45 °C (%) = $500^{th}$-cycle discharge capacity/first-cycle discharge capacity × 100%.

### Testing the high-temperature intermittent cycle performance

Putting a lithium-ion battery in a 45 °C thermostat, charging the battery at a constant current of 0.5 C until a voltage of 4.45 V, charging the battery at a constant voltage of 4.45 V until a current of 0.05 C, leaving the battery to stand for 19.5 hours, and then discharging the battery at a constant current of 0.5 C until a voltage of 3.0 V, thereby completing a first charge-discharge cycle. Recording the discharge capacity of the battery in the first cycle as an initial discharge capacity of the lithium-ion battery. Repeating the foregoing charge-discharge operations for 23 cycles. Subsequently, charging the battery at a constant current of 0.5 C until a voltage of 4.4 V, charging the battery at a constant voltage of 4.4 V until a current of 0.05 C, leaving the battery to stand for 19.5 hours, and then discharging the battery at a constant current of 0.5 C until a voltage of 3.0 V, thereby completing a second charge-discharge cycle. Repeating the foregoing operations of the second charge-discharge cycle for 113 cycles, and recording the remaining discharge capacity of the lithium-ion battery. Calculating the capacity retention rate and the thickness growth rate of the lithium-ion battery.

Capacity retention rate = remaining discharge capacity/initial discharge capacity × 100%.

Thickness growth rate = $(H_1 - H_0)/H_0 \times 100\%$, where $H_0$ is the initial thickness of the lithium-ion battery fully charged at the end of the first cycle, and $H_1$ is the thickness of the lithium-ion battery fully charged at the end of the $136^{th}$ cycle. The thickness growth rate serves as a metric for evaluating the expansion resistance of the lithium-ion battery.

### Measuring the content of constituents of the electrolyte

Disassembling and centrifuging a discharged lithium-ion battery to obtain a liquid specimen. Performing an ion chromatography (IC) test on the liquid specimen to obtain the content of the lithium salt in the electrolyte. Testing, by using a gas chromatography mass spectrometry (GC-MS) instrument, the liquid specimen obtained by centrifugation to determine the mass ratio between constituents in the electrolyte. Calculating the mass percent of each constituent in

the electrolyte with reference to the content of the lithium salt determined above.

**Analyzing surface morphology and testing elements of the positive electrode plate**

Cutting the positive electrode plate into specimens of 6 mm × 6 mm in size with scissors, and using a relatively flat side of the specimen as a surface to be cut. Using an ion beam cross-section polisher (IB-09010 CP) to polish the flat side perpendicular to the thickness direction of the positive electrode plate, where the process parameters of the polishing are: voltage 6 kV, duration 2 hours (h), diameter of the ion beam 500 μm, grinding speed 100 μm/h, and a vacuum degree $10^{-4}$ Pa. The resultant polished surface is a CP cutting surface, that is, a cross-section of the positive electrode plate, serving as a specimen ready for surface morphology analysis and surface element testing of the positive electrode plate.

Observing the microscopic morphology of the positive active material layer of the resultant specimen by using a scanning electron microscope (ZEISS SEM), and measuring the particle diameter of the positive electrode additive. Determining the molar ratio between elements in the positive electrode additive at a position between particles of the positive active material distributed in the cross-section of the positive electrode plate by using an energy dispersive X-ray spectrometer (OXFORD EDS) together with the SEM. First, observing the cross-section of the positive electrode plate in the scanning electron microscope, and then determining the molar ratio between elements of the constituent at the position between particles of the positive active material by using the EDS, and confirming the particles of the positive electrode additive. Recording the molar ratio between elements on the surface of the positive electrode additive. Counting the particle diameters of the particles of the positive electrode additive in 5 SEM images at a magnification of 5000×. Counting 50 particles in each image. Calculating the average value of the particle diameters as the particle diameter D of the particles of the positive electrode additive, measured in nm.

**Embodiment 1-1**

**<Preparing a positive electrode plate>**

Mixing $LiCoO_2$ as a positive active material, conductive carbon black as a conductive agent, polyvinylidene difluoride (PVDF) as a binder, and lithium aluminum titanium phosphate ($Li_{1.5}Al_{0.5}Ti_{1.5}(PO_4)_3$) as a positive electrode additive at a mass ratio of 96.9: 1.4: 1.6: 0.1, adding N-methyl-pyrrolidone (NMP), and stirring well to obtain a positive electrode slurry with a solid content of 72 wt%. Coating one surface of a 9 μm-thick positive current collector aluminum foil with the positive electrode slurry evenly, and drying the aluminum foil at 85 °C for 4 hours to obtain a positive electrode plate coated with a 60 μm-thick 74 mm-wide positive active material layer on a single side. Repeating the foregoing steps on the other surface of the aluminum foil to obtain a positive electrode plate coated with the positive active material layer on both sides. Subsequently, drying the electrode plate for 4 hours in an 85 °C vacuum environment, and performing cold pressing, cutting, and slitting to obtain a positive electrode plate of 74 mm × 867 mm in size.

**<Preparing a negative electrode plate>**

Mixing graphite as a negative active material, conductive carbon black as a conductive agent, sodium carboxymethyl cellulose as a thickener, and styrenebutadiene rubber as a binder at a mass ratio of 96.4: 1.5: 0.5: 1.6, adding deionized water, and stirring well to obtain a negative electrode slurry with a solid content of 54 wt%. Coating one surface of 10 μm-thick negative current collector copper foil with the negative electrode slurry evenly, and drying the copper foil at 85 °C for 4 hours to obtain a negative electrode plate coated with a 75 μm-thick 76.6 mm-wide negative active material layer on a single side. Repeating the foregoing steps on the other surface of the copper foil to obtain a negative electrode plate coated with the negative active material layer on both sides. Subsequently, drying the electrode plate for 4 hours in an 85 °C vacuum environment, and performing cold pressing, cutting, and slitting to obtain a negative electrode plate of 78 mm × 875 mm in size.

**<Preparing a separator>**

Mixing PVDF and alumina ceramics at a mass ratio of 1: 2, and adding NMP as a solvent to formulate a ceramics layer slurry with a solid content of 12 wt%, and stirring well. Applying the slurry evenly onto one surface of a 5 μm-thick polyethylene substrate, and performing drying to obtain a separator coated with a 2 μm-thick alumina ceramics layer on a single side. Adding PVDF into the NMP solvent, stirring well to formulate a PVDF slurry with a solid content of 25 wt%, and then applying the PVDF onto the surface of the alumina ceramics layer at a concentration of 0.08 $mg/cm^2$, and drying the surface at 85 °C for 4 hours. Finally, applying the PVDF onto the other surface of the polyethylene substrate at a concentration of 0.08 $mg/cm^2$, and drying the surface at 85 °C for 4 hours to obtain a separator.

**<Preparing an electrolyte>**

Mixing EC, PC, and DEC at a mass ratio of 20: 20: 60 in an argon atmosphere glovebox with a moisture content lower than 10 ppm, so as to obtain a base solvent. Adding a lithium salt $LiPF_6$ into the base solvent, adding the compound Formula (I-1) in the category of Formula (I), and stirring well to obtain an electrolyte. Based on the mass of the electrolyte, the mass percent of $LiPF_6$ is 12.5%, the mass percent of the compound represented by Formula (I) is 2%, and the remaining constituent is the base solvent.

**<Preparing a lithium-ion battery>**

Stacking the above-prepared positive electrode plate, separator, and negative electrode plate in sequence in such a way that the side, coated with the alumina ceramics layer and PVDF, of the separator is oriented toward the positive electrode plate, and the side coated with only the PVDF is oriented toward the negative electrode plate, and that the separator is located between the positive electrode plate and the negative electrode plate to serve a function of separation. Winding the stacked structure to obtain an electrode assembly. Welding tabs to the electrode assembly, and then putting the electrode assembly into an aluminum laminated film packaging bag, dehydrating the packaged electrode assembly in an 85 °C vacuum oven for 12 hours, and then injecting the prepared electrolyte. Performing steps such as vacuum sealing, standing, chemical formation, shaping, capacity test, and secondary packaging to obtain a pouch-type lithium-ion battery of 3.3 mm × 39 mm × 96 mm in size.

**Embodiments 1-2 to 1-5**

Identical to Embodiment 1-1 except that, in <Preparing a positive electrode plate>, the mass percent of the positive electrode additive is adjusted according to Table 1A and Table 1B, the mass percent of the positive active material $LiCoO_2$ is changed accordingly, and the aggregate mass percent of the conductive agent and the binder remains unchanged.

**Embodiments 1-6 to 1-12**

Identical to Embodiment 1-3 except that, in <Preparing a positive electrode plate>, the type of the positive electrode additive is adjusted according to Table 1A and Table 1B.

**Embodiments 1-13 to 1-16**

Identical to Embodiment 1-3 except that, in <Preparing an electrolyte>, the type of the compound represented by Formula (I) is adjusted according to Table 1A and Table 1B.

**Embodiments 1-17 to 1-39**

Identical to Embodiment 1-3 except: (i) in <Preparing a positive electrode plate>, the type and mass percent of the positive electrode additive are adjusted according to Table 1A and Table 1B, the mass percent of the positive active material $LiCoO_2$ varies with the mass percent of the positive electrode additive, and the aggregate mass percent of the conductive agent and the binder remains unchanged; and (ii) in <Preparing an electrolyte>, the type and mass percent of the compound represented by Formula (I) are adjusted according to Table 1A and Table 1B, the mass percent of the base solvent varies with the mass percent of the compound represented by Formula (I), and the mass percent of the lithium salt remains unchanged.

**Embodiments 2-1 to 2-2**

Identical to Embodiment 1-3 except that, in <Preparing a positive electrode plate>, the value of D and the type and mass percent of the positive electrode additive are adjusted according to Table 2A and Table 2B to satisfy the molar ratios between elements specified in Table 2A and Table 2B.

**Embodiment 2-3**

Identical to Embodiment 1-24 except that, in <Preparing a positive electrode plate>, the value of D and the type and mass percent of the positive electrode additive are adjusted according to Table 2A and Table 2B to satisfy the molar ratios between elements specified in Table 2A and Table 2B.

**Embodiment 2-4**

Identical to Embodiment 1-25 except that, in <Preparing a positive electrode plate>, the value of D and the type and mass percent of the positive electrode additive are adjusted according to Table 2A and Table 2B to satisfy the molar ratios between elements specified in Table 2A and Table 2B.

**Embodiments 2-5 to 2-8**

Identical to Embodiment 1-3 except that, in <Preparing a positive electrode plate>, the value of D and the type and mass percent of the positive electrode additive are adjusted according to Table 2A and Table 2B to satisfy the molar ratios between elements specified in Table 2A and Table 2B.

**Embodiments 3-1 to 3-16**

Identical to Embodiment 1-30 except that, in <Preparing an electrolyte>, the compound represented by Formula (II) is further added according to Table 3, the type and mass percent of the compound represented by Formula (II) are adjusted according to Table 3, the mass percent of the base solvent is changed accordingly, and the mass percent of the lithium salt remains unchanged.

**Embodiments 4-1 to 4-5**

Identical to Embodiment 1-30 except that, in <Preparing an electrolyte>, an electrolyte additive is further added according to Table 4A and Table 4B, the type and mass percent of the electrolyte additive are adjusted according to Table 4A and Table 4B, the mass percent of the base solvent is changed accordingly, and the mass percent of the lithium salt remains unchanged.

**Embodiments 4-6 to 4-7**

Identical to Embodiment 1-30 except that, in <Preparing an electrolyte>, an electrolyte additive is further added according to Table 4A and Table 4B, the type and mass percent of the compound represented by Formula I as well as the type and mass percent of the electrolyte additive are adjusted according to Table 4A and Table 4B, the mass percent of the base solvent is changed accordingly, and the mass percent of the lithium salt remains unchanged.

**Embodiment 4-8**

Identical to Embodiment 1-30 except that, in <Preparing an electrolyte>, an electrolyte additive is further added according to Table 4A and Table 4B, the type and mass percent of the electrolyte additive are adjusted according to Table 4A and Table 4B, the mass percent of the base solvent is changed accordingly, and the mass percent of the lithium salt remains unchanged.

**Comparative Embodiment 1**

Identical to Embodiment 1-1 except that, in <Preparing a positive electrode plate>, no positive electrode additive is added, the mass percent of the positive active material $LiCoO_2$ is changed accordingly, and the aggregate mass percent of the conductive agent and the binder remains unchanged.

**Comparative Embodiment 2**

Identical to Embodiment 1-1 except that, in <Preparing an electrolyte>, no compound represented by Formula (I) is added, the mass percent of the base solvent is changed accordingly, and the mass percent of the lithium salt remains unchanged.

**Comparative Embodiments 3 to 4**

Identical to Embodiment 1-3 except that, in <Preparing a positive electrode plate>, the mass percent of the positive electrode additive is adjusted according to Table 1A and Table 1B, the mass percent of the positive active material $LiCoO_2$ is changed accordingly, and the aggregate mass percent of the conductive agent and the binder remains unchanged.

**Comparative Embodiments 5 to 6**

Identical to Embodiment 1-1 except that, in <Preparing an electrolyte>, the mass percent of the compound represented by Formula (I) is adjusted according to Table 1A and Table 1B, the mass percent of the base solvent is changed accordingly, and the mass percent of the lithium salt remains unchanged.

**Comparative Embodiment 7**

Identical to Embodiment 1-3 except: (i) in <Preparing a positive electrode plate>, the mass percent of the positive electrode additive is adjusted according to Table 1A and Table 1B, the mass percent of the positive active material $LiCoO_2$ is changed accordingly, and the aggregate mass percent of the conductive agent and the binder remains unchanged; and (ii) in <Preparing an electrolyte>, the mass percent of the compound represented by Formula (I) is adjusted according to Table 1A and Table 1B, the mass percent of the base solvent is changed accordingly, and the mass percent of the lithium salt remains unchanged.

Table 1A and Table 1B to Table 4A and Table 4B show the preparation parameters and performance parameters of the embodiments and comparative embodiments.

**Table 1A**

| | Positive electrode additive | Molecular formula of positive electrode additive | p | Compound represented by Formula (I) |
|---|---|---|---|---|
| Embodiment 1-1 | Lithium aluminum titanium phosphate | $Li_{1.5}Al_{0.5}Ti_{1.5}(PO_4)_3$ | 0.1 | Formula (I-1) |
| Embodiment 1-2 | Lithium aluminum titanium phosphate | $Li_{1.5}Al_{0.5}Ti_{1.5}(PO_4)_3$ | 0.2 | Formula (I-1) |
| Embodiment 1-3 | Lithium aluminum titanium phosphate | $Li_{1.5}Al_{0.5}Ti_{1.5}(PO_4)_3$ | 0.5 | Formula (I-1) |
| Embodiment 1-4 | Lithium aluminum titanium phosphate | $Li_{1.5}Al_{0.5}Ti_{1.5}(PO_4)_3$ | 0.8 | Formula (I-1) |
| Embodiment 1-5 Embodiment 1-5 | Lithium aluminum titanium phosphate | $Li_{1.5}Al_{0.5}Ti_{1.5}(PO_4)_3$ | 1 | Formula (I-1) |
| Embodiment 1-6 | Lithium aluminum titanium phosphate | $Li_{1.3}Al_{0.3}Ti_{1.7}(PO_4)_3$ | 0.5 | Formula (I-1) |
| Embodiment 1-7 | Lithium lanthanum titanium oxide | $Li_{0.33}La_{0.56}TiO_3$ | 0.5 | Formula (I-1) |
| Embodiment 1-8 | Lithium lanthanum tantalum oxide | $Li_{0.33}La_{0.56}Ta_{0.8}O_3$ | 0.5 | Formula (I-1) |
| Embodiment 1-9 | Lithium aluminum germanium phosphate | $Li_{1.5}A1_{0.5}Ge_{1.5}(PO_4)_3$ | 0.5 | Formula (I-1) |
| Embodiment 1-10 | Lithium lanthanum zirconium oxide | $Li_7La_3Zr_2O_{12}$ | 0.5 | Formula (I-1) |
| Embodiment 1-11 | Tantalum-doped lithium lanthanum zirconium oxide | $Li_{6.75}La_3Zr_{1.75}Ta_{0.25}O_{12}$ | 0.5 | Formula (I-1) |
| Embodiment 1-12 | Niobium-doped lithium lanthanum zirconium oxide | $Li_{6.75}La_3Zr_{1.75}Nb_{0.25}O_{12}$ | 0.5 | Formula (I-1) |
| Embodiment 1-13 | Lithium aluminum titanium phosphate | $Li_{1.5}Al_{0.5}Ti_{1.5}(PO_4)_3$ | 0.5 | Formula (I-4) |

(continued)

| | Positive electrode additive | Molecular formula of positive electrode additive | p | Compound represented by Formula (I) |
|---|---|---|---|---|
| Embodiment 1-14 | Lithium aluminum titanium phosphate | $Li_{1.5}Al_{0.5}Ti_{1.5}(PO_4)_3$ | 0.5 | Formula (I-6) |
| Embodiment 1-15 Embodiment 1-15 | Lithium aluminum titanium phosphate | $Li_{1.5}Al_{0.5}Ti_{1.5}(PO_4)_3$ | 0.5 | Formula (I-8) |
| Embodiment 1-16 | Lithium aluminum titanium phosphate | $Li_{1.5}Al_{0.5}Ti_{1.5}(PO_4)_3$ | 0.5 | Formula (I-11) |
| Embodiment 1-17 | Lithium aluminum titanium phosphate | $Li_{1.5}Al_{0.5}Ti_{1.5}(PO_4)_3$ | 0.5 | Formula (I-6) |
| Embodiment 1-18 | Lithium aluminum titanium phosphate | $Li_{1.5}Al_{0.5}Ti_{1.5}(PO_4)_3$ | 0.1 | Formula (I-6) |
| Embodiment 1-19 | Lithium lanthanum titanium oxide | $Li_{0.33}La_{0.56}TiO_3$ | 0.5 | Formula (I-6) |
| Embodiment 1-20 | Lithium aluminum titanium phosphate | $Li_{1.5}Al_{0.5}Ti_{1.5}(PO_4)_3$ | 0.5 | Formula (I-2) |
| Embodiment 1-21 | Lithium aluminum titanium phosphate | $Li_{1.5}Al_{0.5}Ti_{1.5}(PO_4)_3$ | 0.5 | Formula (I-3) |
| Embodiment 1-22 | Lithium aluminum germanium phosphate | $Li_{1.5}Al_{0.5}Ti_{1.5}(PO_4)_3$ | 0.5 | Formula (I-5) |
| Embodiment 1-23 | Lithium lanthanum zirconium oxide | $Li_7La_3Zr_2O_{12}$ | 0.3 | Formula (I-7) |
| Embodiment 1-24 | Lithium lanthanum titanium oxide | $Li_{0.5}La_{0.5}TiO_3$ | 1 | Formula (I-6) |
| Embodiment 1-25 | Lithium lanthanum zirconium oxide | $Li_7La_3Zr_2O_{12}$ | 0.8 | Formula (I-9) |
| Embodiment 1-26 Embodiment 1-26 | Niobium-doped lithium lanthanum zirconium oxide | $Li_{6.75}La_3Zr_{1.75}Nb_{0.25}O_{12}$ | 0.5 | Formula (1-10) |
| Embodiment 1-27 | Tantalum-doped lithium lanthanum zirconium oxide | $Li_{6.75}La_3Zr_{1.75}Ta_{0.25}O_{12}$ | 0.8 | Formula (I-12) |
| Embodiment 1-28 | Tantalum-doped lithium lanthanum zirconium oxide | $Li_{6.75}La_3Zr_{1.75}Ta_{0.25}O_{12}$ | 0.5 | Formula (I-11) |
| Embodiment 1-29 | Tantalum-doped lithium lanthanum zirconium oxide | $Li_{6.75}La_3Zr_{1.75}Ta_{0.25}O_{12}$ | 1 | Formula (I-1) + Formula (I-2) |
| Embodiment 1-30 | Lithium aluminum titanium phosphate | $Li_{1.5}Al_{0.5}Ti_{1.5}(PO_4)_3$ | 0.5 | Formula (I-1) + Formula (I-4) |
| Embodiment 1-31 | Niobium-doped lithium lanthanum zirconium oxide | $Li_{6.75}La_3Zr_{1.75}Nb_{0.25}O_{12}$ | 0.5 | Formula (I-1) + Formula (I-6) |

(continued)

| | Positive electrode additive | Molecular formula of positive electrode additive | p | Compound represented by Formula (I) |
|---|---|---|---|---|
| Embodiment 1-32 | Lithium lanthanum zirconium oxide | $Li_7La_3Zr_2O_{12}$ | 0.8 | Formula (I-1) + Formula (I-6) + Formula (I-7) |
| Embodiment 1-33 | Lithium aluminum titanium phosphate | $Li_{1.5}Al_{0.5}Ti_{1.5}(PO_4)_3$ | 0.3 | Formula (I-1) + Formula (I-6) + Formula (I-7) + Formula (I-10) |
| Embodiment 1-34 | Lithium aluminum titanium phosphate | $Li_{1.5}Al_{0.5}Ti_{1.5}(PO_4)_3$ | 0.03 | Formula (I-1) + Formula (I-2) + Formula (I-4) + Formula (I-6) + Formula (I-7) + Formula (I-10) |
| Embodiment 1-35 Embodiment 1-35 | Lithium aluminum titanium phosphate + lithium lanthanum titanium oxide | $Li_{1.5}Al_{0.5}Ti_{1.5}(PO_4)_3+Li_{0.33}La_{0.56}TiO_3$ | 0.5+ 0.3 | Formula (I-1) + Formula (I-6) |
| Embodiment 1-36 | Lithium aluminum titanium phosphate + lithium lanthanum zirconium oxide | $Li_{1.5}Al_{0.5}Ti_{1.5}(PO_4)_3+Li_7La_3Zr_2O_{12}$ | 0.3+ 0.5 | Formula (I-1) + Formula (I-6) |
| Embodiment 1-37 | Lithium lanthanum zirconium oxide + niobium-doped lithium lanthanum zirconium oxide | $Li_7La_3Zr_2O_{12}+Li_{6.8}La_3Zr_{1.8}Nb_{0.2}O_{12}$ | 0.3+ 0.3 | Formula (I-1) + Formula (I-6) |
| Embodiment 1-38 | Lithium lanthanum titanium oxide + tantalum-doped lithium lanthanum zirconium oxide | $Li_{0.5}La_{0.5}TiO_3+Li_{6.5}La_3Zr_{1.5}Ta_{0.5}O_{12}$ | 0.3+ 0.5 | Formula (I-1) + Formula (I-6) |
| Embodiment 1-39 | Lithium aluminum titanium phosphate + lithium lanthanum titanium oxide + tantalum-doped lithium lanthanum zirconium oxide | $Li_{1.5}Al_{0.5}Ti_{1.5}(PO_4)_3+Li_{0.5}La_{0.5}TiO_3+Li_{6.5}La_3Zr_{1.5}Ta_{0.5}O_{12}$ | 0.8+ 0.5+ 0.3 | Formula (I-1) + Formula (I-6) |
| Comparative Embodiment 1 | / | / | / | Formula (I-1) |
| Comparative Embodiment 2 | Lithium aluminum titanium phosphate | $Li_{1.5}Al_{0.5}Ti_{1.5}(PO_4)_3$ | 0.1 | / |
| Comparative Embodiment 3 | Lithium aluminum titanium phosphate | $Li_{1.5}Al_{0.5}Ti_{1.5}(PO_4)_3$ | 0.01 | Formula (I-1) |
| Comparative Embodiment 4 | Lithium aluminum titanium phosphate | $Li_{1.5}Al_{0.5}Ti_{1.5}(PO_4)_3$ | 1.5 | Formula (I-1) |

(continued)

| | Positive electrode additive | Molecular formula of positive electrode additive | p | Compound represented by Formula (I) |
|---|---|---|---|---|
| Comparative Embodiment 5 | Lithium aluminum titanium phosphate | $Li_{1.5}Al_{0.5}Ti_{1.5}(PO_4)_3$ | 0.1 | Formula (I-1) |
| Comparative Embodiment 6 | Lithium aluminum titanium phosphate | $Li_{1.5}Al_{0.5}Ti_{1.5}(PO_4)_3$ | 0.1 | Formula (I-1) |
| Comparative Embodiment 7 | Lithium aluminum titanium phosphate | $Li_{1.5}Al_{0.5}Ti_{1.5}(PO_4)_3$ | 1.5 | Formula (I-1) |

**Table 1B**

| | q | p/q | High-temperature intermittent capacity retention rate of battery cycled at 45 °C for 136 cycles (%) | Thickness growth rate (%) | Capacity retention rate of battery cycled at 45 °C for 500 cycles (%) |
|---|---|---|---|---|---|
| Embodiment 1-1 | 2 | 0.05 | 68 | 14.5 | 70.6 |
| Embodiment 1-2 | 2 | 0.1 | 68.3 | 14.2 | 71.1 |
| Embodiment 1-3 | 2 | 0.25 | 69.2 | 13.4 | 71.9 |
| Embodiment 1-4 | 2 | 0.4 | 69 | 13.6 | 71.8 |
| Embodiment 1-5 | 2 | 0.5 | 68.7 | 13.9 | 71.5 |
| Embodiment 1-6 | 2 | 0.25 | 69.1 | 13.5 | 71.9 |
| Embodiment 1-7 | 2 | 0.25 | 68.5 | 14.0 | 71.3 |
| Embodiment 1-8 | 2 | 0.25 | 68.7 | 13.7 | 71.7 |
| Embodiment 1-9 | 2 | 0.25 | 68.1 | 14.2 | 70.9 |
| Embodiment 1-10 | 2 | 0.25 | 68.4 | 13.9 | 70.8 |
| Embodiment 1-11 | 2 | 0.25 | 69.2 | 13.5 | 71.2 |
| Embodiment 1-12 | 2 | 0.25 | 69.0 | 13.6 | 71.3 |
| Embodiment 1-13 | 2 | 0.25 | 69.1 | 13.4 | 71.9 |
| Embodiment 1-14 | 2 | 0.25 | 69.5 | 13.2 | 72.3 |
| Embodiment 1-15 | 2 | 0.25 | 68.5 | 14.0 | 71.3 |
| Embodiment 1-16 | 2 | 0.25 | 68.9 | 13.7 | 71.7 |
| Embodiment 1-17 | 0.5 | 1 | 68 | 14.1 | 70.5 |
| Embodiment 1-18 | 0.1 | 1 | 63.7 | 17.2 | 61.2 |
| Embodiment 1-19 | 1 | 0.5 | 68.5 | 14 | 71.3 |
| Embodiment 1-20 | 3 | 0.17 | 68.9 | 13.6 | 71.6 |
| Embodiment 1-21 | 3 | 0.2 | 68.7 | 14.0 | 71.5 |
| Embodiment 1-22 | 1 | 0.5 | 68.1 | 14.2 | 70.9 |
| Embodiment 1-23 | 1 | 0.3 | 68.3 | 14.1 | 71.0 |

(continued)

| | q | p/q | High-temperature intermittent capacity retention rate of battery cycled at 45 °C for 136 cycles (%) | Thickness growth rate (%) | Capacity retention rate of battery cycled at 45 °C for 500 cycles (%) |
|---|---|---|---|---|---|
| Embodiment 1-24 | 2 | 0.5 | 69.5 | 13.2 | 72.3 |
| Embodiment 1-25 | 1 | 0.8 | 68.6 | 13.8 | 71.4 |
| Embodiment 1-26 | 1 | 0.5 | 69.1 | 13.4 | 71.8 |
| Embodiment 1-27 | 1 | 0.8 | 69.4 | 13.2 | 72.2 |
| Embodiment 1-28 | 1 | 0.5 | 68.9 | 13.7 | 71.7 |
| Embodiment 1-29 | 2+2 | 0.25 | 69.1 | 13.6 | 71.9 |
| Embodiment 1-30 | 2+1 | 0.17 | 69.7 | 13.3 | 72.4 |
| Embodiment 1-31 | 2+2 | 0.13 | 69.3 | 13.2 | 72.1 |
| Embodiment 1-32 | 2+2+2 | 0.13 | 69.1 | 13.5 | 71.9 |
| Embodiment 1-33 | 2+2+2+1 | 0.04 | 69 | 13.6 | 71.9 |
| Embodiment 1-34 | 2+2+1+ 3 + 2 + 2 | 0.025 | 68.5 | 13.8 | 71.3 |
| Embodiment 1-35 | 2+2 | 0.2 | 69.5 | 13.2 | 72.3 |
| Embodiment 1-36 | 2+2 | 0.2 | 69.1 | 13.4 | 71.7 |
| Embodiment 1-37 | 2+2 | 0.15 | 69.7 | 13.5 | 72.5 |
| Embodiment 1-38 | 2+2 | 0.2 | 69.2 | 13.3 | 71.8 |
| Embodiment 1-39 | 2+2 | 0.4 | 68.2 | 14.3 | 71 |
| Comparative Embodiment 1 | 0.5 | / | 55.2 | 26.1 | 51.3 |
| Comparative Embodiment 2 | / | / | 50.4 | 26.7 | 53.1 |
| Comparative Embodiment 3 | 2 | 0.005 | 52.6 | 24.2 | 55.4 |
| Comparative Embodiment 4 | 2 | 0.75 | 51.5 | 24.6 | 52.2 |
| Comparative Embodiment 5 | 0.01 | 10 | 55.2 | 23.4 | 54.3 |
| Comparative Embodiment 6 | 15 | 0.007 | 53.1 | 21.8 | 51.9 |
| Comparative Embodiment 7 | 15 | 0.1 | 56.3 | 24.1 | 54.7 |
| Note: "/" in Table 1A and Table 1B means absence of the constituent or parameter. | | | | | |

As can be seen from Embodiments 1-1 to 1-39 versus Comparative Embodiments 1, 2, and 7, when the positive electrode additive and the compound represented by Formula (I) falling within the range of this application are applied to the lithium-ion battery, by adjusting the content of the additive and the compound to fall within the range specified herein, this application can improve the cycle capacity retention rate of the lithium-ion battery cycled at 45 °C for 500 cycles and the high-temperature intermittent cycle capacity retention rate of the battery cycled for 136 cycles, and reduce the thickness growth rate of the lithium-ion battery. The lithium-ion battery provided in an embodiment of this application is improved in terms of cycle performance, high-temperature intermittent cycle performance, and expansion resistance.

The value p of the mass percent of the positive electrode additive generally affects the cycle performance, high-temperature intermittent cycle performance, and expansion resistance of the lithium-ion battery. As can be seen from Embodiments 1-1 to 1-5 versus Comparative Embodiments 3 and 4, when the value of p is unduly small, the content of the positive electrode additive is unduly low, and therefore, the cycle capacity retention rate and high-temperature intermittent cycle capacity retention rate of the lithium-ion battery are relatively low, and the thickness growth rate is relatively high. When the value of p is unduly large, the content of the positive electrode additive is unduly high, and therefore, the cycle capacity retention rate and high-temperature intermittent cycle capacity retention rate of the lithium-ion battery are relatively low, and the thickness growth rate is relatively high. When p satisfies $0.1 \leq p \leq 1.2$, the cycle capacity retention rate and high-temperature intermittent cycle capacity retention rate of the lithium-ion battery are higher, and the thickness growth rate is lower. Therefore, by controlling the value of p to fall within the range specified herein, the lithium-ion battery is improved in terms of cycle performance, high-temperature intermittent cycle performance, and expansion resistance.

The type of the positive electrode additive generally affects the cycle performance, high-temperature intermittent cycle performance, and expansion resistance of the lithium-ion battery. As can be seen from Embodiments 1-6 to 1-12, when the type of the positive electrode additive falls within the range specified herein, the cycle capacity retention rate and the high-temperature intermittent cycle capacity retention rate of the lithium-ion battery are high, and the thickness growth rate is low, indicating that the lithium-ion battery exhibits good cycle performance, high-temperature intermittent cycle performance, and expansion resistance.

The type of the compound represented by Formula (I) generally affects the cycle performance, high-temperature intermittent cycle performance, and expansion resistance of the lithium-ion battery. As can be seen from Embodiment 1-6, Embodiment 1-13, and Embodiment 1-16, when the type of the compound represented by Formula (I) falls within the range specified herein, the cycle capacity retention rate and the high-temperature intermittent cycle capacity retention rate of the lithium-ion battery are high, and the thickness growth rate is low, indicating that the lithium-ion battery exhibits good cycle performance, high-temperature intermittent cycle performance, and expansion resistance.

The value q of the mass percent of the compound represented by Formula (I) generally affects the cycle performance, high-temperature intermittent cycle performance, and expansion resistance of the lithium-ion battery. As can be seen from Embodiment 1-6, Embodiments 1-17 to 1-22, and Embodiments 1-29 to 1-34 versus Comparative Embodiments 5 and 6, when the value of q is unduly small, the content of the compound represented by Formula (I) is unduly low, and therefore, the cycle capacity retention rate and high-temperature intermittent cycle capacity retention rate of the lithium-ion battery are relatively low, and the thickness growth rate is relatively high. When the value of q is unduly large, the content of the compound represented by Formula (I) is unduly high, and therefore, the cycle capacity retention rate and high-temperature intermittent cycle capacity retention rate of the lithium-ion battery are relatively low, and the thickness growth rate is relatively high. When q satisfies $0.1 \leq q \leq 12$, the cycle capacity retention rate and high-temperature intermittent cycle capacity retention rate of the lithium-ion battery are relatively high, and the thickness growth rate is relatively low. Further, when q satisfies $0.5 \leq q \leq 12$, the cycle capacity retention rate and high-temperature intermittent cycle capacity retention rate of the lithium-ion battery are even higher, and the thickness growth rate is even lower. Therefore, by controlling the value of q to fall within the range specified herein, the lithium-ion battery is improved in terms of cycle performance, high-temperature intermittent cycle performance, and expansion resistance.

The ratio of the value p of the mass percent of the positive electrode additive to the value q of the mass percent of the compound represented by Formula (I), denoted as p/q, generally affects the cycle performance, high-temperature intermittent cycle performance, and expansion resistance of the lithium-ion battery. As can be seen from Embodiments 1-1 to 1-5 and Embodiments 1-19 to 1-39, when the p/q ratio satisfies $0.025 \leq p/q \leq 1$, the cycle capacity retention rate and the high-temperature intermittent cycle capacity retention rate of the lithium-ion battery are high, and the thickness growth rate is low. Therefore, by controlling the value of the p/q ratio to fall within the range specified herein, the lithium-ion battery exhibits good cycle performance, high-temperature intermittent cycle performance, and expansion resistance.

**Table 2A**

| | Type of positive electrode additive | Molecular formula and content of positive electrode additive | D (nm) |
|---|---|---|---|
| Embodiment 1-3 | Lithium aluminum titanium phosphate | 0.5% $Li_{1.5}Al_{0.5}Ti_{1.5}(PO_4)_3$ | 350 |
| Embodiment 2-1 | Lithium aluminum titanium phosphate | 0.75% $Li_{1.3}Al_{0.3}Ti_{1.7}(PO_4)_3$ + 0.25%$Li_{1.5}Al_{0.5}Ti_{1.5}(PO_4)_3$ | 350/300[a] |
| Embodiment 2-2 | Lithium aluminum titanium phosphate + lithium aluminum germanium phosphate | 0.17% $Li_{1.5}Al_{0.5}Ti_{1.5}(PO_4)_3$ + 0.83% $Li_{1.5}A1_{0.5}Ge_{1.5}(PO_4)_3$ | 350/400[a] |
| Embodiment 1-24 | Lithium lanthanum titanium oxide | 1% $Li_{0.5}La_{0.5}TiO_3$ | 480 |
| Embodiment 2-3 | Lithium aluminum titanium phosphate + lithium lanthanum zirconium oxide | 0.25% $Li_{1.5}Al_{0.5}Ti_{1.5}(PO_4)_3$ + 0.25%$Li_7La_3Zr_2O_{12}$ | 450/350[a] |

(continued)

| | Type of positive electrode additive | Molecular formula and content of positive electrode additive | D (nm) |
|---|---|---|---|
| Embodiment 2-4 | Tantalum-doped lithium lanthanum zirconium oxide + lithium lanthanum titanium oxide | 0.2% $Li_{6.5}La_3Zr_{1.5}Ta_{0.5}O_{12}$ + 0.3% $Li_{0.5}La_{0.5}TiO_3$ | 500/400[a] |
| Embodiment 1-25 | Lithium lanthanum zirconium oxide | 0.8% $Li_7La_3Zr_2O_{12}$ | 470 |
| Embodiment 1-26 | Niobium-doped lithium lanthanum zirconium oxide | 0.5% $Li_{6.75}La_3Zr_{1.75}Nb_{0.25}O_{12}$ | 450 |
| Embodiment 1-27 | Tantalum-doped lithium lanthanum zirconium oxide | 0.8% $Li_{6.75}La_3Zr_{1.75}Ta_{0.25}O_{12}$ | 490 |
| Embodiment 1-35 | Lithium aluminum titanium phosphate + lithium lanthanum titanium oxide | 0.5% $Li_{1.5}Al_{0.5}Ti_{1.5}(PO_4)_3$ + 0.3% $Li_{0.33}La_{0.56}TiO_3$ | 350/450[a] |
| Embodiment 1-36 | Lithium aluminum titanium phosphate + lithium lanthanum zirconium oxide | 0.5% $Li_{1.5}Al_{0.5}Ti_{1.5}(PO_4)_3$ + 0.5% $Li_7La_3Zr_2O_{12}$ | 350/450[a] |
| Embodiment 1-37 | Lithium lanthanum zirconium oxide + niobium-doped lithium lanthanum zirconium oxide | 0.3% $Li_7La_3Zr_2O_{12}$ +0.3% $Li_{6.8}La_3Zr_{1.8}Nb_{0.2}O_{12}$ | 350/450[a] |
| Embodiment 1-38 | Lithium lanthanum titanium oxide + tantalum-doped lithium lanthanum zirconium oxide | 0.3% $Li_{0.5}La_{0.5}TiO_3$ + 0.5% $Li_{6.5}La_3Zr_{1.5}Ta_{0.5}O_{12}$ | 350/450[a] |
| Embodiment 1-39 Embodiment 1-39 | Lithium aluminum titanium phosphate + lithium lanthanum titanium oxide + tantalum-doped lithium lanthanum zirconium oxide | 0.8% $Li_{1.5}Al_{0.5}Ti_{1.5}(PO_4)_3$ + 0.5%$Li_{0.5}La_{0.5}TiO_3$ + 0.3% $Li_{6.5}La_3Zr_{1.5}Ta_{0.5}O_{12}$ | 350/450/450[a] |
| Embodiment 2-5 | Lithium lanthanum tantalum oxide + lithium lanthanum titanium oxide | 0.3% $Li_{0.33}La_{0.56}Ta_{0.8}O_3$ + 0.34%$Li_{0.33}La_{0.56}TiO_3$ | 350/450[a] |
| Embodiment 2-6 | Lithium lanthanum tantalum oxide + niobium-doped lithium lanthanum zirconium oxide | 0.2% $Li_{0.33}La_{0.56}Ta_{0.8}O_3$ + 0.6%$Li_{6.8}La_3Zr_{1.8}Nb_{0.2}O_{12}$ | 350/500[a] |
| Embodiment 2-7 | Lithium aluminum germanium phosphate + lithium aluminum titanium phosphate | 0.1% $Li_{1.5}Al_{0.5}Ge_{1.5}(PO_4)_3$ + 0.5%$Li_{1.5}Al_{0.5}Ti_{1.5}(PO_4)_3$ | 400/350[a] |
| Embodiment 2-8 | Lithium aluminum germanium phosphate | 0.5% $Li_{1.5}A1_{0.5}Ge_{1.5}(PO_4)_3$ | 400 |

**Table 2B**

| | Molar ratio between elements | High-temperature intermittent capacity retention rate of battery cycled at 45 °C for 136 cycles (%) | Thickness growth rate (%) | Capacity retention rate of battery cycled at 45 °C for 500 cycles (%) |
|---|---|---|---|---|
| Embodiment 1-3 | Ti/Al = 3 | 69.2 | 13.4 | 71.9 |
| Embodiment 2-1 | Ti/Al = 4.71 | 68.7 | 13.6 | 71.3 |
| Embodiment 2-2 | Ti/Al = 0.51<br>Ge/Al = 2.49 | 69 | 13.7 | 71.5 |
| Embodiment 1-24 | Ti/La = 2 | 69.5 | 13.2 | 72.3 |

(continued)

| | Molar ratio between elements | High-temperature intermittent capacity retention rate of battery cycled at 45 °C for 136 cycles (%) | Thickness growth rate (%) | Capacity retention rate of battery cycled at 45 °C for 500 cycles (%) |
|---|---|---|---|---|
| Embodiment 2-3 | Ti/La = 0.5<br>Ti/Al = 3<br>La/Zr = 1.5 | 69.7 | 13.1 | 72.1 |
| Embodiment 2-4 | La/Zr = 2.5<br>Ti/La = 0.4 | 68.8 | 13.5 | 71.4 |
| Embodiment 1-25 | La/Zr = 1.5 | 68.6 | 13.8 | 71.4 |
| Embodiment 1-26 | La/Zr = 1.71 | 69.1 | 13.4 | 71.8 |
| Embodiment 1-27 | La/Zr = 1.71 | 69.4 | 13.2 | 72.2 |
| Embodiment 1-35 | Ti/Al = 4.2<br>Ti/La = 6.84 | 69.5 | 13.2 | 72.3 |
| Embodiment 1-36 | Ti/Al = 3<br>La/Zr = 1.5 | 69.1 | 13.4 | 71.7 |
| Embodiment 1-37 | La/Zr = 1.58 | 69.7 | 13.5 | 72.5 |
| Embodiment 1-38 | Ti/La = 0.18<br>La/Zr = 2.2<br>La/Ta = 6.6 | 69.2 | 13.3 | 71.8 |
| Embodiment 1-39 | Ti/Al = 4.25<br>Ti/La = 1.48<br>La/Zr = 2.56<br>La/Ta = 7.67 | 68.2 | 14.3 | 71 |
| Embodiment 2-5 | La/Ta = 1.49<br>Ti/La = 0.95 | 69.3 | 13.6 | 72.4 |
| Embodiment 2-6 | La/Ta = 11.95<br>La/Zr = 1.77 | 68.1 | 14.2 | 72.1 |
| Embodiment 2-7 | Ge/Al = 0.5<br>Ti/Al = 2.5 | 67.8 | 14.3 | 68.7 |
| Embodiment 2-8 | Ge/Al = 3 | 68.1 | 14.2 | 70.9 |
| Note: The data entries separated by "/" in the particle diameter D of the positive electrode additive with a superscript "a" in Table 2A and Table 2B are the particle diameters of two or more positive electrode additives respectively. For example, 350/450 in Embodiment 1-35 means that the particle diameter D of lithium aluminum titanium phosphate is 350 nm, and the particle diameter D of lithium lanthanum titanium oxide is 450 nm. The data entries in other embodiments are understood similarly. | | | | |

The value of the particle diameter D of the positive electrode additive generally affects the cycle performance, high-temperature intermittent cycle performance, and expansion resistance of the lithium-ion battery. As can be seen from Embodiments 1-24 to 1-27 and Embodiments 2-1 to 2-8, when the value of D falls within the range specified herein, the cycle capacity retention rate and the high-temperature intermittent cycle capacity retention rate of the lithium-ion battery are high, and the thickness growth rate is low. In this way, the lithium-ion battery exhibits good cycle performance, high-temperature intermittent cycle performance, and expansion resistance.

The molar ratio between elements at the position between particles of the positive active material in the cross-section of the positive electrode plate generally affects the cycle performance, high-temperature intermittent cycle performance, and expansion resistance of the lithium-ion battery. As can be seen from Embodiment 1-3, Embodiments

1-24 to 1-27, Embodiments 1-35 to 1-39, and Embodiments 2-1 to 2-8, when the molar ratio between elements at the position between particles of the positive active material in the cross-section of the positive electrode plate falls within the range specified herein, the cycle capacity retention rate and the high-temperature intermittent cycle capacity retention rate of the lithium-ion battery are high, and the thickness growth rate is low, indicating that the lithium-ion battery exhibits good cycle performance, high-temperature intermittent cycle performance, and expansion resistance.

FIG. 1 is a scanning electron microscope image of a positive active material layer according to Embodiment 1-3 of this application. The large-diameter particle in FIG. 1 is the positive active material particle 10. A positive electrode additive 20 exists at a position between the positive active material particles 10. FIG. 2 is a distribution diagram of Ti element at the position between particles of the positive active material in a cross-section of a positive electrode plate according to Embodiment 1-3 of this application. The distribution of Ti element at the position indicated by the dashed box in FIG. 2 is sharply different, and this position may be deemed as a position of the positive electrode additive. The Ti/Al molar percent at this position is measured and recorded in Table 2A and Table 2B above.

**Table 3**

| | Compound represented by Formula (II) | x | High-temperature intermittent capacity retention rate of battery cycled at 45 °C for 136 cycles (%) | Thickness growth rate (%) | Capacity retention rate of battery cycled at 45 °C for 500 cycles (%) |
|---|---|---|---|---|---|
| Embodiment 1-30 | / | / | 69.7 | 13.3 | 72.4 |
| Embodiment 3-1 | Formula (II-1) | 2 | 71.3 | 12.5 | 73.9 |
| Embodiment 3-2 | Formula (II-2) | 1 | 71.5 | 12.7 | 74.1 |
| Embodiment 3-3 | Formula (II-3) | 2 | 70.7 | 13.1 | 73.4 |
| Embodiment 3-4 | Formula (II-4) | 0.5 | 71.8 | 12.6 | 74.5 |
| Embodiment 3-5 | Formula (II-5) | 0.5 | 71.4 | 12.8 | 73.6 |
| Embodiment 3-6 | Formula (II-6) | 0.5 | 71.6 | 12.5 | 74.0 |
| Embodiment 3-7 | Formula (II-7) | 0.5 | 71.5 | 12.7 | 73.8 |
| Embodiment 3-8 | Formula (II-8) | 3 | 70.8 | 13.1 | 73.5 |
| Embodiment 3-9 | Formula (II-9) | 2 | 70.5 | 12.9 | 73.2 |
| Embodiment 3-10 | Formula (II-10) | 1 | 70.9 | 12.6 | 73.2 |
| Embodiment 3-11 | Formula (II-11) | 2 | 72.1 | 11.9 | 74.5 |
| Embodiment 3-12 | Formula (II-6) | 0.1 | 70.5 | 12.7 | 73.0 |
| Embodiment 3-13 | Formula (II-11) + Formula (II-4) | 2+0.5 | 72.8 | 11.5 | 75.6 |

(continued)

| | Compound represented by Formula (II) | x | High-temperature intermittent capacity retention rate of battery cycled at 45 °C for 136 cycles (%) | Thickness growth rate (%) | Capacity retention rate of battery cycled at 45 °C for 500 cycles (%) |
|---|---|---|---|---|---|
| Embodiment 3-14 | Formula (II-8) + Formula (II-11) + Formula (II-6) | 2+2.5 +0.5 | 72.6 | 11.7 | 75.5 |
| Embodiment 3-15 | Formula (II-6) | 3 | 70.1 | 11.5 | 74.5 |
| Embodiment 3-16 | Formula (II-6) | 5 | 68.2 | 11.0 | 71.4 |
| Note: "/" in Table 3 means absence of the constituent or parameter. | | | | | |

The type of the compound represented by Formula (II) generally affects the cycle performance, high-temperature intermittent cycle performance, and expansion resistance of the lithium-ion battery. As can be seen from Embodiment 1-30 and Embodiments 3-1 to 3-11, when the type of the compound represented by Formula (II) falls within the range specified herein, the cycle capacity retention rate and the high-temperature intermittent cycle capacity retention rate of the lithium-ion battery are higher, and the thickness growth rate is lower. This indicates that, in a case that the positive active material layer of the lithium-ion battery includes the positive electrode additive and the electrolyte includes the compound represented by Formula (I), the compound represented by Formula (II) is further introduced in the electrolyte, thereby making the lithium-ion battery exhibit better cycle performance, high-temperature intermittent cycle performance, and expansion resistance.

The value x of the mass percent of the compound represented by Formula (II) generally affects the cycle performance, high-temperature intermittent cycle performance, and expansion resistance of the lithium-ion battery. As can be seen from Embodiment 3-6 and Embodiments 3-12 to 3-16, when x satisfies $0.1 \leq x \leq 5$, the cycle capacity retention rate and the high-temperature intermittent cycle capacity retention rate of the lithium-ion battery are high, and the thickness growth rate is low. Therefore, by controlling the value of x to fall within the range specified herein, the lithium-ion battery exhibits good cycle performance, high-temperature intermittent cycle performance, and expansion resistance.

**Table 4A**

| | Compound represented by Formula (I) | q | Compound represented by Formula (II) | x | Electrolyte additive |
|---|---|---|---|---|---|
| Embodiment 1-30 | Formula (I-1) + Formula (I-4) | 2+1 | / | / | / |
| Embodiment 4-1 | Formula (I-1) + Formula (I-4) | 2+1 | / | / | LiBOB |
| Embodiment 4-2 | Formula (I-1) + Formula (I-4) | 2+1 | / | / | DTD |
| Embodiment 4-3 | Formula (I-1) + Formula (I-4) | 2+1 | / | / | VC |
| Embodiment 4-4 | Formula (I-1) + Formula (I-4) | 2+1 | / | / | PS |
| Embodiment 4-5 | Formula (I-1) + Formula (I-4) | 2+1 | / | / | VC + LiBOB + PS |
| Embodiment 4-6 | Formula (I-1) + Formula (I-6) + Formula (1-10) | 2+2+1 | / | / | VC + PS |

(continued)

| | Compound represented by Formula (I) | q | Compound represented by Formula (II) | x | Electrolyte additive |
|---|---|---|---|---|---|
| Embodiment 4-7 | Formula (1-10) | 0.5 | / | / | VC + PS |
| Embodiment 4-8 | Formula (I-1) + Formula (I-4) | 2+1 | Formula II-11 + Formula II-4 | 2.5+0.5 | VC + LiBOB + PS |

**Table 4B**

| | Content of electrolyte additive (%) | q/y | High-temperature intermittent capacity retention rate of battery cycled at 45 °C for 136 cycles (%) | Thickness growth rate (%) | Capacity retention rate of battery cycled at 45 °C for 500 cycles (%) |
|---|---|---|---|---|---|
| Embodiment 1-30 | / | / | 69.7 | 13.3 | 72.4 |
| Embodiment 4-1 | 0.2 | / | 71.4 | 12.7 | 73.6 |
| Embodiment 4-2 | 0.2 | / | 70.3 | 12.5 | 72.9 |
| Embodiment 4-3 | 0.2 | / | 71.6 | 12.9 | 74.4 |
| Embodiment 4-4 | 3 | / | 71.9 | 11.9 | 74.6 |
| Embodiment 4-5 | 1+1+5 | 0.5 | 72.6 | 12.2 | 75.0 |
| Embodiment 4-6 | 0.2+3 | 1.6 | 73.5 | 9.8 | 76.9 |
| Embodiment 4-7 | 0.2+2 | 0.23 | 71.3 | 12.5 | 73.8 |
| Embodiment 4-8 | 0.5+0.2+3 | 0.86 | 74.5 | 10.4 | 77.7 |
| Note: "/" in Table 4A and Table 4B means absence of the constituent or parameter. | | | | | |

The type of the electrolyte additive generally affects the cycle performance, high-temperature intermittent cycle performance, and expansion resistance of the lithium-ion battery. As can be seen from Embodiment 1-30 and Embodiments 4-1 to 4-8, when the type of the electrolyte additive falls within the range specified herein, the cycle capacity retention rate and the high-temperature intermittent cycle capacity retention rate of the lithium-ion battery are higher, and the thickness growth rate is lower. This indicates that, in a case that the positive active material layer of the lithium-ion battery includes the positive electrode additive and the electrolyte includes the compound represented by Formula (I), the electrolyte additive is further introduced in the electrolyte, thereby making the lithium-ion battery exhibit better cycle performance, high-temperature intermittent cycle performance, and expansion resistance.

The ratio of the value q of the mass percent of the compound represented by Formula (I) to the aggregate mass percent y of the 1,3-propane sultone and vinylene carbonate, denoted as q/y, generally affects the cycle performance, high-temperature intermittent cycle performance, and expansion resistance of the lithium-ion battery. As can be seen from Embodiment 4-5 to Embodiment 4-8, when the q/y ratio satisfies $0.5 \le q/y \le 1.6$, the cycle capacity retention rate and the high-temperature intermittent cycle capacity retention rate of the lithium-ion battery are higher, and the thickness growth rate is lower. Therefore, by controlling the q/y ratio to fall within the range specified herein, the lithium-ion battery is improved in terms of cycle performance, high-temperature intermittent cycle performance, and expansion resistance.

As can be seen from Embodiments 4-3 and 4-4 and Embodiments 4-6 and 4-7, when the electrolyte includes both the 1,3-propane sultone and the vinylene carbonate, by controlling the q/y ratio to fall within the range specified herein, the cycle capacity retention rate and the high-temperature intermittent cycle capacity retention rate of the lithium-ion battery are higher, and the thickness growth rate is lower, indicating that the lithium-ion battery exhibits better cycle performance, high-temperature intermittent cycle performance, and expansion resistance.

As can be seen from Embodiment 1-30 and Embodiment 4-8, in a case that the positive active material layer of the lithium-ion battery includes the positive electrode additive and the electrolyte includes the compound represented by Formula (I), both the compound represented by Formula (II) and the electrolyte additive are further introduced in the electrolyte. Therefore, the cycle capacity retention rate and high-temperature intermittent cycle capacity retention rate

of the lithium-ion battery are higher, and the thickness growth rate is lower, indicating that the lithium-ion battery exhibits better cycle performance, high-temperature intermittent cycle performance, and expansion resistance.

It is hereby noted that the relational terms herein such as first and second are used only to differentiate an entity or operation from another entity or operation, and do not require or imply any actual relationship or sequence between the entities or operations. Moreover, the terms "include", "comprise", and any variation thereof are intended to cover a non-exclusive inclusion relationship in which a process, method, object, or device that includes or comprises a series of elements not only includes such elements, but also includes other elements not expressly specified or also includes inherent elements of the process, method, object, or device.

Different embodiments of this application are described in a correlative manner. For the same or similar part in one embodiment, reference may be made to another embodiment. Each embodiment focuses on differences from other embodiments.

What is described above is merely preferred embodiments of this application, but not intended to limit the protection scope of this application. Any modifications, equivalent replacements, improvements, and the like made without departing from the spirit and principles of this application still fall within the protection scope of this application.

## Claims

1. An electrochemical device, comprising a positive electrode plate and an electrolyte, wherein the positive electrode plate comprises a positive current collector and a positive active material layer disposed on at least one surface of the positive current collector;

   **characterized in that**, the positive active material layer comprises a positive active material and a positive electrode additive, the positive electrode additive comprises at least one selected from the group consisting of lithium titanium aluminum phosphate, lithium lanthanum titanium oxide, lithium lanthanum tantalum oxide, lithium aluminum germanium phosphate, lithium lanthanum zirconium oxide, niobium-doped lithium lanthanum zirconium oxide, and tantalum-doped lithium lanthanum zirconium oxide;
   based on a mass of the positive active material layer, a mass percent of the positive electrode additive is p%, $0.1 \leq p \leq 1.2$;
   the electrolyte comprises a compound represented by Formula (I):

   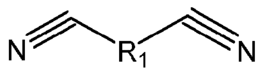

   Formula (I),

   in Formula (I) above, $R_1$ is selected from

   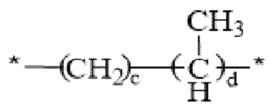

   ,

   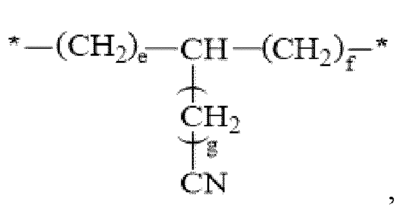

   , or

   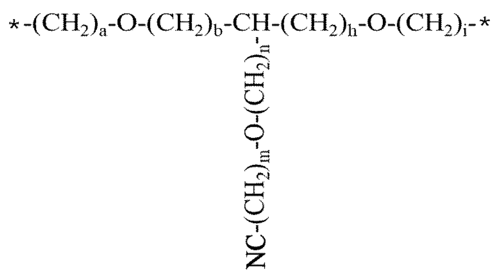

   ,

   wherein a, b, c, d, e, f, g, h, i, m, and n each are independently integers from 0 to 10, and c and d are not both 0; and based on a mass of the electrolyte, a mass percent of the compound represented by Formula (I) is q%, $0.1 \leq q \leq 12$.

2. The electrochemical device according to claim 1, **characterized in that**, the compound represented by Formula (I) comprises the following compounds:

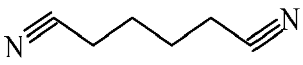

Formula (I-1),

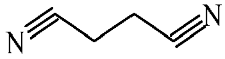

Formula (I-2),

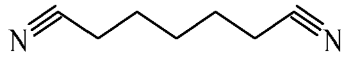

Formula (I-3)

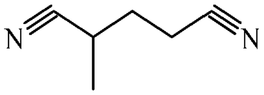

Formula (I-4),

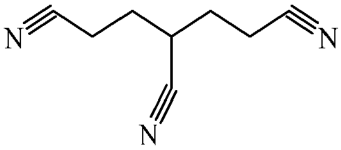

Formula (I-5),

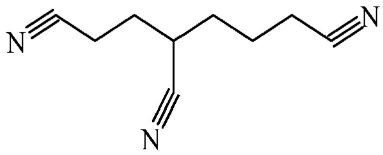

Formula (I-6)

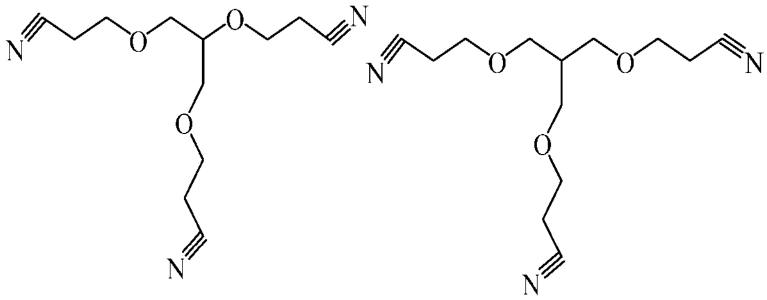

Formula (I-7), Formula (I-8),

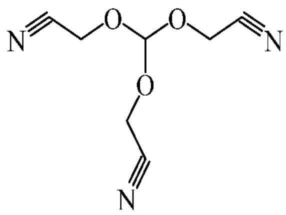

Formula (I-9)

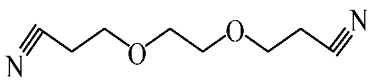

Formula (I-10),

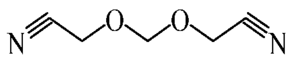

Formula (I-11),

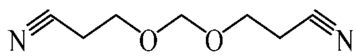

Formula (I-12).

3. The electrochemical device according to claim 1 or 2, **characterized in that**, $0.5 \leq q \leq 12$.

4. The electrochemical device according to any one of claims 1 to 3, **characterized in that**, $0.3 \leq p \leq 1$

5. The electrochemical device according to any one of claims 1 to 4, **characterized in that**, $0.025 \leq p/q \leq 1$.

6. The electrochemical device according to any one of claims 1 to 5, **characterized in that**, $0.25 \leq p/q \leq 0.8$.

7. The electrochemical device according to any one of claims 1 to 6, **characterized in that**, a particle diameter of the positive electrode additive is D nm, $300 \leq D \leq 500$.

8. The electrochemical device according to any one of claims 1 to 7, **characterized in that**, molar ratios between elements at a position between particles of the positive active material in a cross-section of the positive electrode plate satisfy at least one of the followingconditions:

(a)

$$0.5 \leqslant Ti/Al \leqslant 5;$$

(b)

$$0.1 \leqslant Ti/La \leqslant 7;$$

(c)

$$1 \leqslant La/Zr \leqslant 3;$$

(d)

$$1 \leqslant La/Ta \leqslant 12;$$

or
(e)

$$0.5 \leqslant Ge/Al \leqslant 3.$$

**9.** The electrochemical device according to any one of claims 1 to 8, **characterized in that**, the electrolyte further comprises a compound represented by Formula (II), and the compound represented by Formula (II) comprises the following compounds:

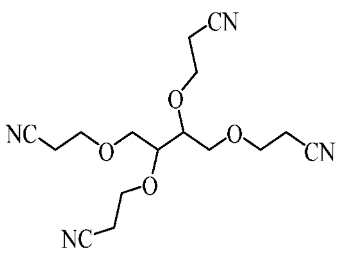
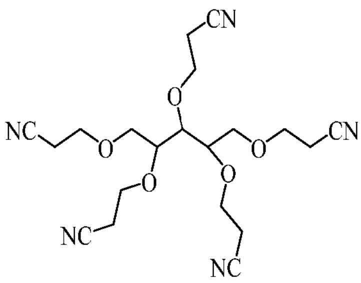
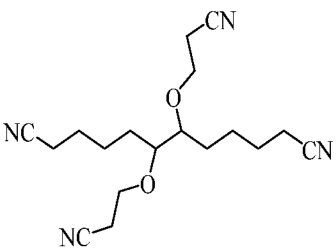

Formula (II-1), Formula (II-2), Formula (II-3)

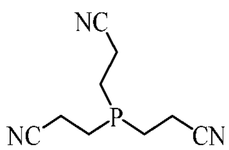
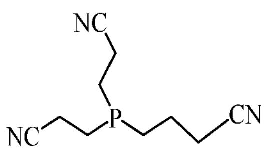
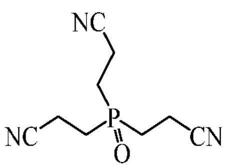
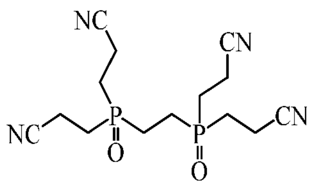

Formula (II-4), Formula (II-5), Formula (II-6), Formula (II-7)

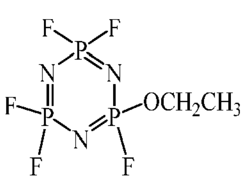
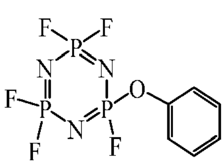
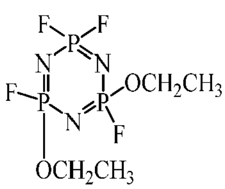
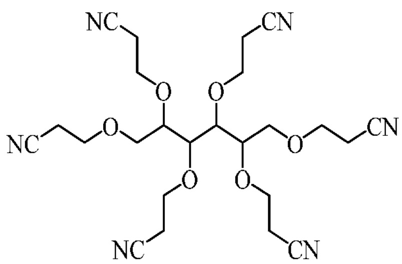

Formula (II-8), Formula (II-9), Formula (II-10), Formula (II-11); and

based on the mass of the electrolyte, a mass percent of the compound represented by Formula (II) is x%, $0.1 \leq x \leq 5$.

**10.** The electrochemical device according to claim 9, **characterized in that**, $0.5 \leq x \leq 3$.

**11.** The electrochemical device according to any one of claims 1 to 10, **characterized in that**, the electrolyte further comprises an electrolyte additive, and

the electrolyte additive comprises at least one selected from the group consisting of 1,3-propane sultone, vinylene carbonate, 1,3,2-dioxazolethiophene-2,2-dioxide, and lithium bis(oxalato)borate; and
based on the mass of the electrolyte, a mass percent of the electrolyte additive is 0.01% to 7%.

**12.** The electrochemical device according to claim 11, **characterized in that**, the electrolyte additive comprises 1,3-propane sultone and vinylene carbonate; and
based on the total mass of the electrolyte, an aggregate mass percent of the 1,3-propane sultone and the vinylene carbonate is y%,$0.5 \leq q/y \leq 1.6$.

**13.** The electrochemical device according to claim 12, $0.86 \leq q/y \leq 1.6$.

**14.** The electrochemical device according to any one of claims 1 to 13, wherein the electrolyte additive comprises 1,3-propane sultone, vinylene carbonate and lithium bis(oxalato)borate, and
based on the total mass of the electrolyte, an aggregate mass percent of the 1,3-propane sultone, vinylene carbonate and lithium bis(oxalato)borate is 3.5% to 7%

**15.** An electronic device, comprising the electrochemical device according to any one of claims 1 to 14.

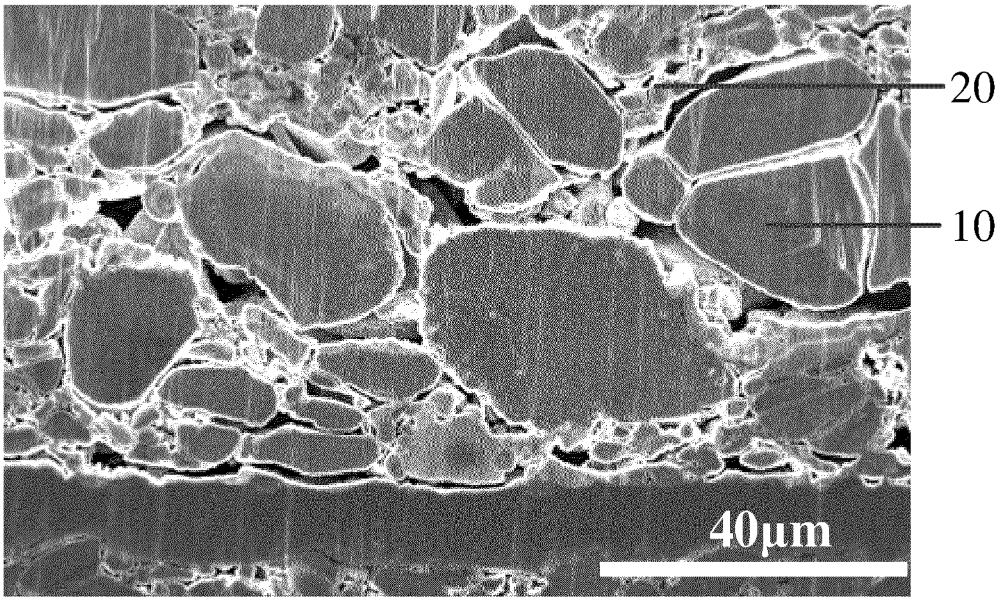


FIG. 1

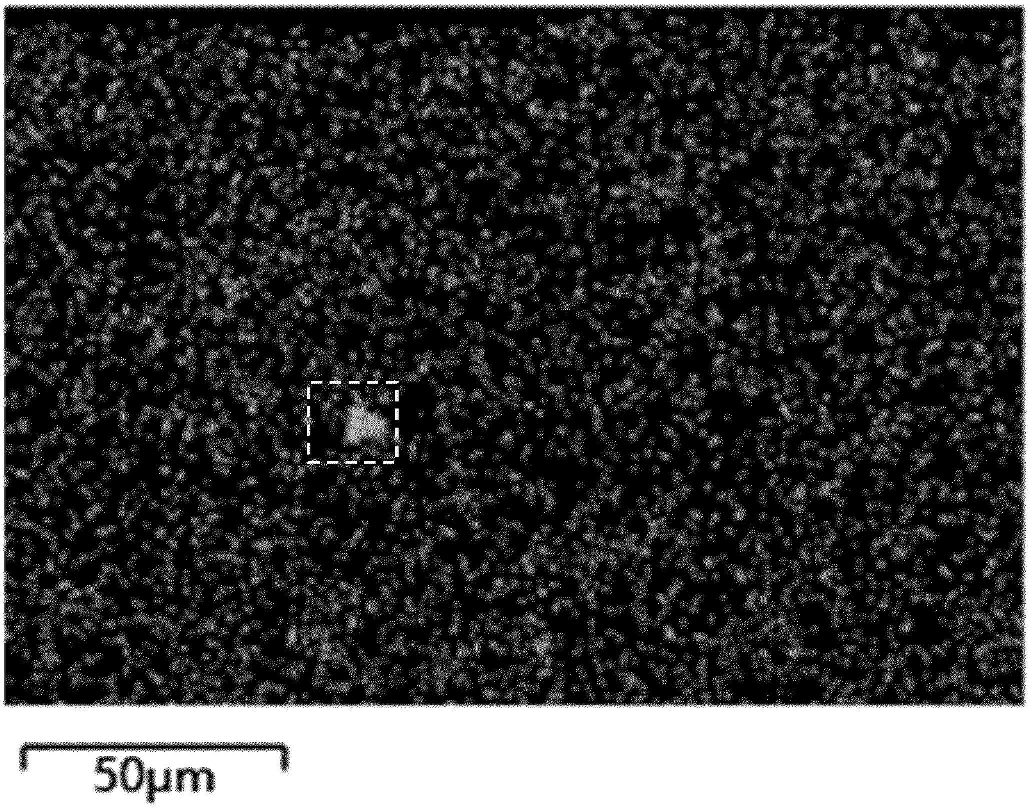


FIG. 2

Europäisches Patentamt
European Patent Office
Office européen des brevets

# EUROPEAN SEARCH REPORT

Application Number
EP 24 16 7836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 784 223 A (GUANGDONG MACHE POWER TECH CO LTD) 22 July 2022 (2022-07-22)<br>* paragraph [0014] - paragraph [0019] *<br>----- | 1-15 | INV.<br>H01M4/131<br>H01M4/36<br>H01M4/525<br>H01M10/0525<br>H01M10/0567 |
| A | US 2021/083317 A1 (YANG CHUN-CHEN [TW] ET AL) 18 March 2021 (2021-03-18)<br>* claims 1,10,11 *<br>----- | 1-15 | |
| | | | TECHNICAL FIELDS SEARCHED (IPC) |
| | | | H01M |

The present search report has been drawn up for all claims

| Place of search | Date of completion of the search | Examiner |
|---|---|---|
| Munich | 13 August 2024 | Steinreiber, J |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 16 7836

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2024

| Patent document cited in search report | Publication date | Patent family member(s) | Publication date |
|---|---|---|---|
| CN 114784223 A | 22-07-2022 | NONE | |
| US 2021083317 A1 | 18-03-2021 | CN 112490498 A | 12-03-2021 |
| | | TW 202111985 A | 16-03-2021 |
| | | US 2021083317 A1 | 18-03-2021 |

EPO FORM P0459

For more details about this annex : see Official Journal of the European Patent Office, No. 12/82